# EUROPEAN PATENT APPLICATION

(11) **EP 4 401 482 A1**
(43) Date of publication of application: **17.07.2024**
(21) Application number: 21956776.5
(22) Date of filing: 09.09.2021
(51) Int. Cl.: H04W 72/04

(54) **TERMINAL AND WIRELESS COMMUNICATION METHOD**

(71) Applicant: NTT DOCOMO, INC., Tokyo 100-6150 (JP)
(72) Inventor: TAKAHASHI, Yuki, Tokyo 100-6150 (JP); NAGATA, Satoshi, Tokyo 100-6150 (JP); PI, Qiping, Beijing 100190 (CN); WANG, Jing, Beijing 100190 (CN); CHEN, Lan, Beijing 100190 (CN)
(74) Representative: Hoffmann Eitle
(86) International application number: PCT/JP2021/033222
(87) International publication number: WO 2023/037479

(57) **Abstract**

This terminal includes: a reception unit that receives a control signal; and a control unit that controls, on the basis of the control signal, the switching of a carrier for transmitting an uplink control signal, and the repeated transmission of the uplink control signal.

## Description

### Technical Field

The present disclosure relates to a terminal and a radio communication method.

### Background Art

Long Term Evolution (LTE) has been specified for achieving a higher data rate, lower latency, and the like in a Universal Mobile Telecommunication System (UMTS) network. Future systems of LTE have also been studied for achieving a broader bandwidth and a higher speed based on LTE. Examples of the future systems of LTE include systems called LTE-Advanced (LTE-A), Future Radio Access (FRA), 5th generation mobile communication system (5G), 5G plus (5G+), Radio Access Technology (New-RAT), New Radio (NR), and the like.

In NR, for example, enhancement of a feedback function from a terminal to a base station has been discussed in order to improve the communication quality (e.g., see Non-Patent Literature (hereinafter, referred to as "NPL") 1).

Information to be fed back from the terminal to the base station is transmitted in a resource for a Physical Uplink Control Channel (PUCCH). Supporting PUCCH carrier switching has been agreed with respect to the extension of an Ultra-Reliable and Low Latency Communications (URLLC) technology in Rel. 17 of 3GPP. Additionally, supporting repetition (repeated transmission) of PUCCH has been agreed in Rels. 15 to 17 of 3GPP.

### Citation List

### Non-Patent Literature

NPL 1
"Enhanced Industrial Internet of Things (IoT) and ultra-reliable and low latency communication," RP-201310, 3GPP TSG RAN Meeting #86e, 3GPP, July, 2020

### Summary of Invention

### Technical Problem

There is scope for further study on an operation of a terminal in a radio system in which repetition and carrier switching for an uplink control signal can be performed.

An aspect of the present disclosure is to provide a terminal that appropriately operates in a radio system in which repetition and carrier switching for an uplink control signal can be performed.

A terminal according to an aspect of the present disclosure includes: a reception section that receives a control signal; and a control section that controls, based on the control signal, switching of a carrier on which an uplink control signal is transmitted, and repetition transmission of the uplink control signal.

A radio communication method according to an aspect of the present disclosure includes: receiving a control signal by a terminal; and controlling, by the terminal, based on the control signal, switching of a carrier on which an uplink control signal is transmitted, and repetition transmission of the uplink control signal.

### Brief Description of Drawings

FIG. 1 illustrates an example of dual connectivity;
FIG. 2 illustrates an example of PUCCH carrier switching;
FIG. 3 illustrates an example of PUCCH repetition;
FIG. 4 illustrates an exemplary higher-layer parameter indicating information on the number of PUCCH repetitions;
FIG. 5 illustrates an example of sub-slot based PUCCH repetition;
FIG. 6 is a diagram for describing an example of Alt. 2-1;
FIG. 7 is a diagram for describing an example of Alt. 2-2;
FIG. 8 is a diagram for describing an example of Option 1-1;
FIG. 9 is a diagram for describing an exemplay error case of Option 1-1;
FIG. 10 is a diagram for describing an example of Option 1-2A;
FIG. 11 is a diagram for describing an example of Option 1-2B-1;
FIG. 12 is a diagram for describing an example of Option 1-2B-2;
FIG. 13 is a diagram for describing an example of Option 2-1;
FIG. 14 is a diagram for describing an exemplay error case of Option 2-1;
FIG. 15 is a diagram for describing an example of Option 2-2A;
FIG. 16 is a diagram for describing an example of Option 2-2B;
FIG. 17 is a diagram for describing an example of Option 2-2C;
FIG. 18 is a diagram for describing an example of Alt. 1;
FIG. 19 is a diagram for describing an exemplay error case of Alt. 1;
FIG. 20 is a diagram for describing an example of Alt. 2-A;
FIG. 21 is a diagram for describing an example of Alt. 2-B;
FIG. 22 is a diagram for describing an example of Alt. 2-C;
FIG. 23 is a block diagram illustrating an exemplary configuration of base station 10 according to an embodiment;
FIG. 24 is a block diagram illustrating an exemplary configuration of terminal 20 according to the present embodiment; and
FIG. 25 illustrates an exemplary hardware configuration of the base station or the terminal according to the present embodiment.

### Description of Embodiments

Hereinafter, an embodiment according to an aspect of the present disclosure will be described in detail with reference to the accompanying drawings.

3GPP has been discussing technologies for schemes called URLLC and Industrial Internet of Things (IIoT) in Rel. 17.

In URLLC, enhancement of a feedback function of a terminal for a Hybrid Automatic Repeat request-Acknowledgement (HARQ-ACK) has been studied. The HARQ-ACK is an example of information on a confirmation response (e.g., acknowledgement) to data received by the terminal. With respect to these study matters for URLLC, supporting dynamic and semi-static PUCCH carrier switching has been agreed. Note that, the PUCCH carrier switching may be called by other names such as control-information -transmitting carrier switching.

The PUCCH carrier switching is a technology to be applied to a case where a base station performs communication through a plurality of cells. Hereinafter, dual connectivity, which is an example of the communication through a plurality of cells, and the PUCCH carrier switching will be described.

### <Dual Connectivity>

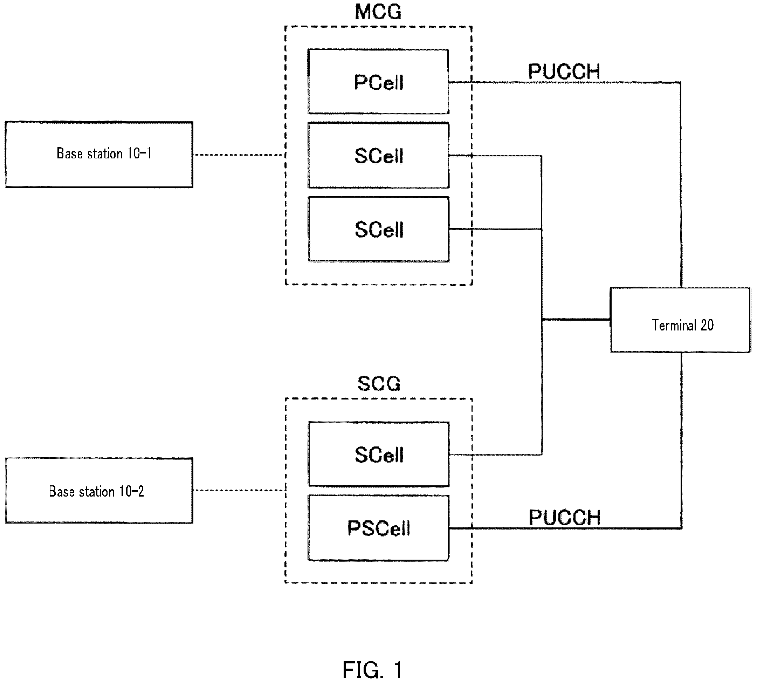

FIG. 1 illustrates an example of dual connectivity (DC). In the example of FIG. 1, base station 10-1 may be a Master Node (MN), and base station 10-2 may be a Secondary Node (SN). As illustrated in the example of FIG. 1, carriers between different base stations are aggregated in the DC.

In the example of FIG. 1, base station 10-1 communicates with terminal 20 through a primary cell (Pcell) and secondary cells (Scells). In the example of FIG. 1, terminal 20 has established an RRC connection with base station 10-1.

In the case of DC, a latency in communication between base stations 10-1 and 10-2 may be present, so that it is difficult to indicate, to base station 10-2, uplink control information (e.g., UCI) received in the Pcell of base station 10-1 via a backhaul link (e.g., a wired or wireless link connecting between base stations 10-1 and 10-2) to reflect the uplink control information in scheduling of an Scell under base station 10-2. Accordingly, in the DC, in addition to the Pcell of base station 10-1, one carrier under base station 10-2 may be configured as a Primary Scell (PScell), and PUCCH transmission may be supported by the PScell. In this case, terminal 20 transmits the UCI to base station 10-2 through the PScell.

In the example of FIG. 1, terminal 20 configures, in addition to the Pcell, the Scells for base station 10-1. Further, terminal 20 configures, in addition to the PScell, the Scell for base station 10-2. Terminal 20 transmits the UCI of each carrier under base station 10-1 via PUCCH of the Pcell. Further, terminal 20 transmits the UCI of each carrier under base station 10-2 via PUCCH of the PScell. In the example of FIG. 1, a cell group (CG) under base station 10-1 may be referred to as a Master Cell-Group (MCG), and a cell group under base station 10-2 may be referred to as a Secondary Cell-Group (SCG).

In a case where the DC is performed, terminal 20 may transmit PUCCH through a Pcell, a PScell, and/or a PUCCH-Scell. Generally, it is not assumed that terminal 20 transmits PUCCH through an Scell other than the Pcell, the PScell, and the PUCCH-Scell.

### <PUCCH carrier switching>

The PUCCH carrier switching has been studied as a method of reducing latency in HARQ-ACK feedback in a Time Division Duplex (TDD) scheme.

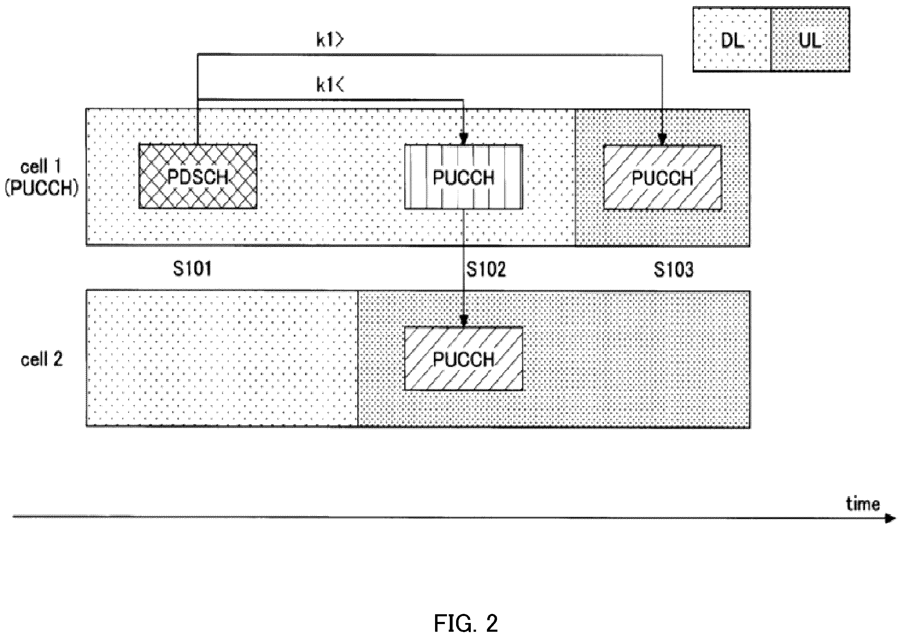

FIG. 2 illustrates an example of the PUCCH carrier switching. In the example of FIG. 2, a base station and a terminal communicate with each other through cells 1 and 2. In the example of FIG. 2, cell 1 is a Pcell whereas cell 2 is an Scell. Further, the example of FIG. 2 illustrates downlink (DL) slots and uplink (UL) slots in the cells.

In the example of FIG. 2, the terminal receives data (receives Physical Downlink shared Channel (PDSCH)) at the timing of S101. The terminal attempts to transmit HARQ-ACK for the data received in S101 at the timing of S102, but the slot of cell 1 at the timing of S102 is the downlink (DL) slot. For this reason, in a case where the terminal transmits HARQ-ACK in cell 1, transmission of the HARQ-ACK is held until a transmission timing of PUCCH in the uplink (UL) slot (e.g., timing of S103 of FIG. 2), so that latency in the HARQ-ACK transmission increases. Note that, the PUCCH transmission timing in the uplink (UL) slot may be referred to as a PUCCH transmission occasion.

In the example of FIG. 2, the slot of cell 2 at the timing of S102 is the UL slot. In the example of FIG. 2, the latency in the HARQ-ACK transmission can be reduced when the terminal can transmit the HARQ-ACK for the data received in S 101 on the PUCCH transmission occasion at the timing of S 102 in cell 2. In URLLC, low latency in a radio section is especially required. Accordingly, in 3GPP, the PUCCH carrier switching in which the terminal switches between carriers for performing PUCCH transmission has been studied as an extension of the URLLC technology.

Note that, in the following embodiment, "the same timing" may be completely the same timing or may represent that all or some of time resources (e.g., one or a plurality of symbols (which may also be resource(s) in time units shorter than symbols)) are the same or overlap.

The PUCCH carrier switching may represent that in a case where the terminal attempts to perform PUCCH transmission at a specific transmission timing of a Pcell (which may be PScell or PUCCH-Scell), the terminal switches a cell in which the PUCCH transmission is performed from the Pcell (which may be PScell or PUCCH-Scell) to an Scell (which is Scell other than PScell in the case of PScell and is Scell other than PUCCH-Scell in the case of PUCCH-Scell) of one or a plurality of Scells in which a slot at the same timing as the specific transmission timing is a UL slot, since the slot at the specific transmission timing of the Pcell (which may be PScell or PUCCH-Scell) is a DL slot. Note that, in an embodiment of the present invention, the unit of the specific transmission timing is not limited to the slot. For example, the specific transmission timing may be a timing in units of subframes or may be a timing in units of symbols.

Two methods have been studied for achieving the PUCCH carrier switching. The first method is a method in which a base station dynamically indicates, to a terminal, a carrier for performing PUCCH transmission. The second method is a method in which a base station semi-statically configures, for a terminal, a carrier for performing the PUCCH transmission. Note that, in the embodiment described below, "PUCCH transmission" and "transmitting PUCCH" may refer to transmission of uplink control information via PUCCH.

The terminal may indicate, to the base station, terminal capability information (UE capability) that specifies information on capability of the terminal for the PUCCH transmission.

For example, information indicating whether the terminal supports switching between configurations related to transmission of control information may be specified as the UE capability information of the terminal. The switching between configurations related to transmission of control information may be, for example, switching between resources (e.g., carriers or cells) used for transmitting the control information. The switching between resources used for transmitting the control information may also be referred to as "PUCCH carrier switching." Further, as the UE capability information of the terminal, information indicating application of dynamic PUCCH carrier switching and/or semi-static PUCCH carrier switching may be specified.

A configuration operation of the semi-static PUCCH carrier switching may be based on RRC configured with a PUCCH cell timing pattern of a PUCCH cell to which the semi-static PUCCH carrier switching is applied. The configuration operation of the semi-static PUCCH carrier switching may also be supported between cells having different numerology.

In the PUCCH carrier switching, a PUCCH resource may be configured per Uplink Bandwidth Part (UL BWP) (e.g., per candidate cell and per UL BWP of candidate cell).

In the case of PUCCH carrier switching based on a dynamic indication of the control information, a K1 value (offset) from PDSCH to HARQ-ACK may be interpreted based on numerology of a target PUCCH cell to be dynamically indicated. Incidentally, the control information may be control information for scheduling PUCCH, such as Downlink control information (DCI). Further, the numerology may be regarded as a slot or a Subcarrier Spacing (SCS).

### <Slot Based PUCCH Repetition>

PUCCH repetition based on a slot (slot based PUCCH repetition) is supported in PUCCH formats 1, 3, and 4 of Rel. 15/16. For example, a terminal repeatedly performs PUCCH transmission a predetermined number of times, based on an indication and/or configuration from a base station.

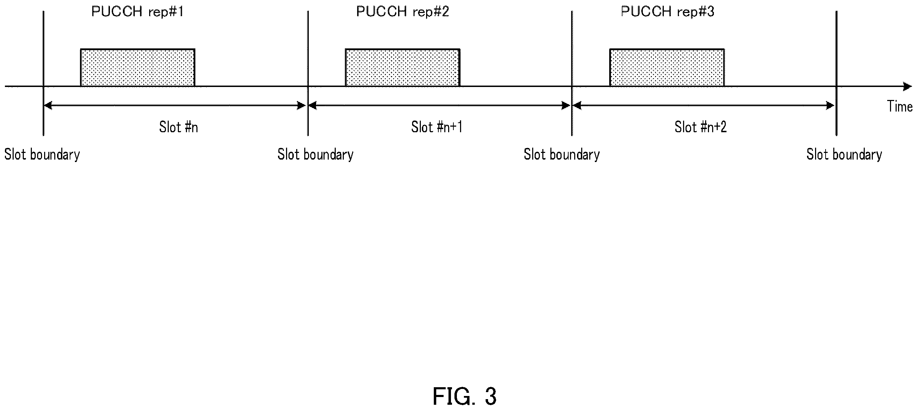

FIG. 3 illustrates an example of PUCCH repetition. The number of times of PUCCH repetition (hereinafter referred to as number of PUCCH repetitions) may be determined based on information indicated from the base station. The n-th repetition may also be referred to as the n-th transmission occasion, for example.

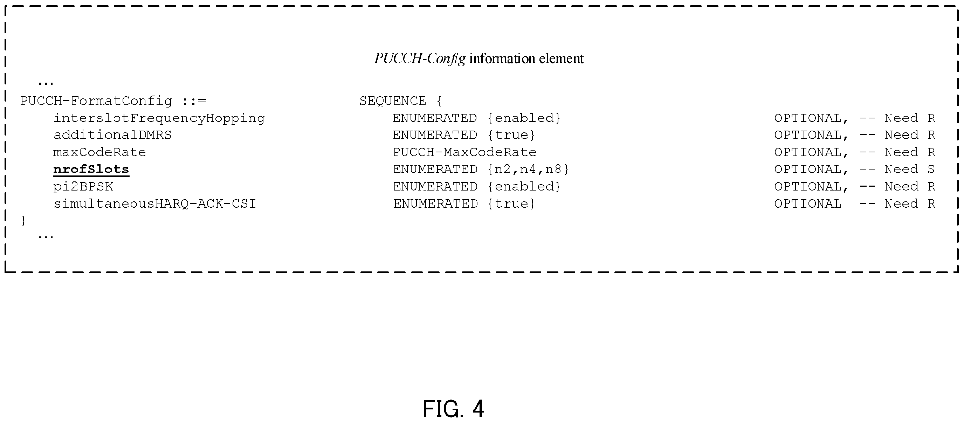

FIG. 4 illustrates an exemplary higher-layer parameter indicating information on the number of PUCCH repetitions. The terminal may receive the information indicating the number of repetitions via, for example, a higher-layer parameter such as RRC.

For example, the terminal may receive the information indicating the number of PUCCH repetitions via an information element of the number of slots (hereinafter referred to as number-of-slots information element), nrofSlots, as illustrated in FIG. 4. The number-of-slots information element, nrofSlots, may be configured per PUCCH resource. The same symbol allocation may be applied between n consecutive slots.

The terminal may be configured with the the number of PUCCH repetitions for PUCCH repetition, "N_PUCCH ^ repeat," for PUCCH format 1, 3, or 4 via the respective number-of-slots information elements, "nrofSlots."

In a case where N_PUCCH^ repeat > 1, the terminal is in accordance with the following regulations 1-1 to 1-3.

### [Regulation 1-1]

The terminal repeats PUCCH transmission with the UCI over N_PUCCH^ repeat slots.

### [Regulation 1-2]

The PUCCH transmission in each of the N_PUCCH^ repeat slots has the same number of consecutive symbols. The number of symbols is provided by the number-of-slots information element, nrofsymbols, in PUCCH format 1 information element PUCCH-format 1, the number-of-slots information element, nrofsymbols, in PUCCH format 3 information element PUCCH-format 3, or the number-of-slots information element, nrofsymbols, in PUCCH format 4 information element PUCCH-format 4.

### [Regulation 1-3]

The PUCCH transmission in each of the N_PUCCH^ repeat slots has the same first symbol (starting symbol index). The first symbol is provided by the starting-symbol-index information element, startingSymbolIndex, in PUCCH format 1 information element PUCCH-format 1, the starting-symbol-index information element, startingSymbolIndex, in PUCCH format 3 information element PUCCH-format 3, or the starting-symbol-index information element, startingSymbolIndex, in PUCCH format 4 information element PUCCH-format 4.

### <Dynamic PUCCH Repetition>

In Rel. 17, it has been agreed to support two options for dynamically indicating a PUCCH repetition factor.

### <Option 1>

A PUCCH repetition factor is configured per PUCCH resource by extending RRC signaling without extending a DCI. The PUCCH repetition factor is implicitly indicated by the DCI.

### <Option 2>

A DCI is extended to explicitly indicate a PUCCH repetition factor. By way of example, a new field is introduced, or the number of bits of an existing field (e.g., PUCCH resource indicator (PRI)) within the DCI for the PUCCH repetition factor indication is increased.

Note that, in Option 1, it has been agreed to support indication of a PUCCH resource and a PUCCH repetition factor related to the PUCCH resource, using a PUCCH Resource Indicator (PRI) and a starting index of a Control Channel Element (CCE) (starting CCE index).

### <Sub-slot based PUCCH Repetition>

In Rel. 17, supporting PUCCH repetition based on a sub-slot (sub-slot based PUCCH repetition) has been agreed.

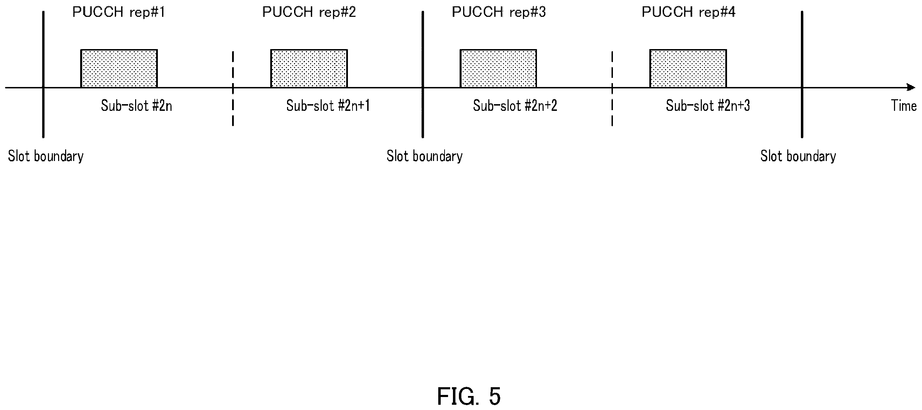

FIG. 5 illustrates an example of the sub-slot based PUCCH repetition. In FIG. 5, an example of the sub-slot based PUCCH repetition is illustrated of a case where a sub-slot length is set to seven symbols (e.g., subslotLengthForPUCCH = 7) and the number of repetitions is set to four (e.g., nrofSlots/nrofsubslots = 4). The terminal, for example, executes control to perform PUCCH transmission in each sub-slot (seven symbols).

In Rel. 17, it has been agreed to support the sub-slot based PUCCH repetition in HARQ-ACK by applying a slot based PUCCH procedure of Rel. 16 to sub-slot based PUCCH. That is, in Rel. 17, the slot based PUCCH of Rel. 16 is employed by appropriately replacing with a "sub-slot" without optimizing unless necessary. Note that a dynamic repetition indicator is supported in the sub-slot based PUCCH of Rel. 17 either.

Besides, in the sub-slot based PUCCH repetition, it has also been agreed to support PUCCH repetition in PUCCH formats 0 and 2.

### <Analysis>

There is scope for further study on an operation of a terminal in a radio system in which the PUCCH carrier switching and the PUCCH repetition can be performed.

For example, there is room for consideration as to whether the PUCCH repetition is determined before the PUCCU carrier switching or after the PUCCU carrier switching. Moreover, there is room for consideration as to whether a PUCCH repetition factor is determined based on a PUCCH resource before the PUCCH carrier switching or based on a PUCCH resource after the PUCCH carrier switching.

### <Regarding PUCCH Repetition and Semi-static PUCCH Carrier Switching>

### <Proposal 1>

The terminal need not assume that determination (configuration and/or indication) of the PUCCH repetition and enabling of the semi-static PUCCH carrier switching are simultaneously performed. The PUCCH repetition may be any of the above-mentioned slot based PUCCH repetition, dynamic PUCCH repetition, and sub-slot PUCCH repetition.

For example, the terminal need not assume the determination of the PUCCH repetition when the semi-static PUCCH carrier switching is enabled. More specifically, when the semi-static PUCCH carrier switching is enabled, the terminal need not assume that a PUCCH repetition factor greater than one is determined for the selected PUCCH resouce.

Moreover, for example, when the PUCCH repetition is determined, the terminal need not assume the enabling of the semi-static PUCCH carrier switching

Note that the base station may handle such that the determination of the PUCCH repetition and the enabling of the semi-static PUCCH carrier switching are not simultaneously performed.

For example, the base station may handle such that the determination of the PUCCH repetition and the enabling of the semi-static PUCCH carrier switching are not simultaneously performed, based on terminal capability information of the terminal. More specifically, when receiving no terminal capability information indicating that a simultaneous operation of the PUCCH repetition and the semi-static PUCCH carrier switching is supported, the base station may handle such that the determination of the PUCCH repetition and the enabling of the semi-static PUCCH carrier switching are not simultaneously performed.

Besides, the terminal may assume control on the semi-static PUCCH carrier switching (e.g., enabling or disabling) based on the determination of the PUCCH repetition (e.g., configuration and/or indication). Alternatively, the terminal may assume the determination of the PUCCH repetition based on the control on the semi-static PUCCH carrier switching.

### <Proposal 2>

The terminal may assume that the determination of the PUCCH repetition and the enabling of the semi-static PUCCH carrier switching are simultaneously performed. When assuming that the determination of the PUCCH repetition and the enabling of the semi-static PUCCH carrier switching are simultaneously performed, the terminal may operate based on the following Proposal 2-0, Proposal 2-1, or Proposal 2-1.

### <Proposal 2-0>

When the determination of the PUCCH repetition and the enabling of the semi-static PUCCH carrier switching are simultaneously performed, the terminal may drop PUCCH.

For example, the terminal need not transmit PUCCH when the semi-static PUCCH carrier switching is enabled and a PUCCH repetition factor greater than one is determined for the selected PUCCH.

Note that the determination of the PUCCH repetition factor may be performed before or after the semi-static PUCCH carrier switching.

Further, in the above, it has been determined not to transmit PUCCH, but the present disclosure is not limited to this. The terminal may transmit one PUCCH and need not perform the repetition transmission.

### <Proposal 2-1>

The terminal may perform (apply) either the PUCCH repetition or the semi-static PUCCH carrier switching. Proposal 2-1 will be described in detail below.

### <Proposal 2-2>

The terminal may perform both the PUCCH repetition and the semi-static PUCCH carrier switching (joint operation). Proposal 2-2 will be described in detail below.

### <Details of Proposal 2-1>

Proposal 2-1 will be described in detail. As mentioned above, in Proposal 2-1, the terminal may perform either the PUCCH repetition or the semi-static PUCCH carrier switching.

### <Alt. 1>

The terminal may give priority to the semi-static PUCCH carrier switching.

For example, the terminal performs the semi-static PUCCH carrier switching when the semi-static PUCCH carrier switching is enabled. The terminal assumes that a PUCCH repetition factor is one, regardless of the repetition factor determined for the PUCCH resource. That is, the terminal transmits one first PUCCH.

### <Alt. 2>

The terminal may give priority to the PUCCH repetition.

For example, the terminal need not perform the semi-static PUCCH carrier switching when repetition is determined in a PUCCH resource configured to a Pcell, a PScell, or a PUCCH-Scell. When the PUCCH repetition is given priority, the terminal may operate based on the following Alt. 2-1 or Alt. 2-2.

### <Alt. 2-1>

The terminal may transmit PUCCH in the Pcell, the PScell, or the PUCCH-Scell at the determined PUCCH repetition factor (the number of repetitions), regardless of the configured PUCCH cell pattern.

Incidentally, a PUCCH cell pattern indicates a switching pattern of a cell in the semi-static PUCCH carrier switching. The PUCCH cell pattern is indicated to terminal by, for example, higher layer signaling such as RRC.

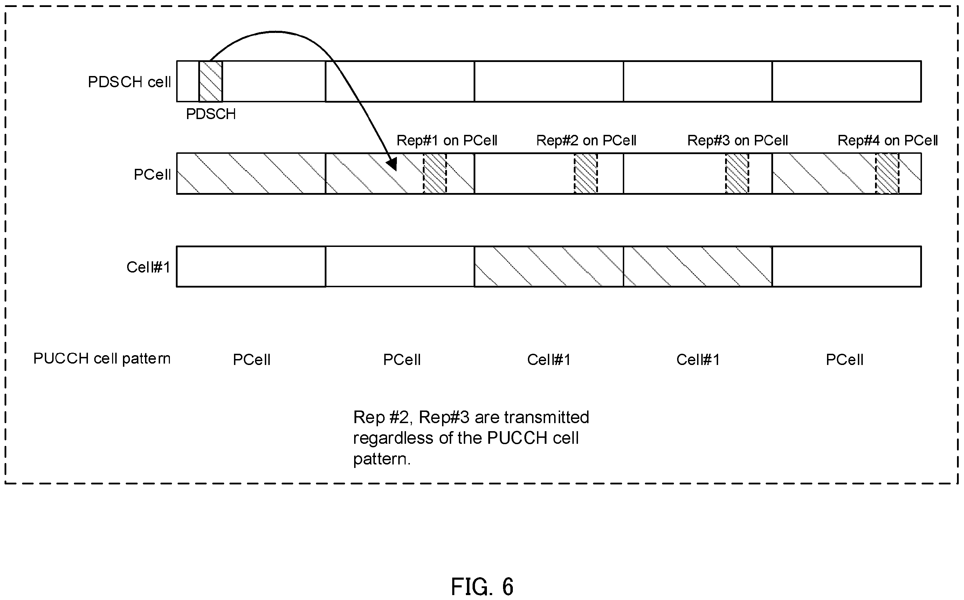

FIG. 6 is a diagram for describing an example of Alt. 2-1. PUCCH is assumed to be transmitted four times in the Pcell. Further, as illustrated in FIG. 6, it is assumed that a PUCCH cell pattern for the semi-static PUCCH carrier switching is PCell, Pcell, Cell#1, Cell#1, and Pcell.

In Alt. 2-1, the terminal may transmit PUCCH at the determined PUCCH repetition factor regardless of a PUCCH cell pattern. For example, as illustrated in FIG. 6, PUCCH to be transmitted for the second and third times may be transmitted in the Pcell determined (indicated) in the PUCCH repetition rather than in Cell #1 configured in the PUCCH cell pattern.

Note that the slot for transmitting the first PUCCH of the PUCCH repetition (PUCCH report slot) may be determined based on K1 value, for example. Meanwhile, the cell for transmitting the first PUCCH of the PUCCH repetition may be determined based on a PUCCH repetition relating parameter to be described below. The cell (carrier) for transmitting the first PUCCH of the PUCCH repetition may be a cell in a PUCCH cell pattern (PCell in example of FIG. 6) corresponding to the PUCCH report slot (second slot from left in example of FIG. 6). Incidentally, the K1 value may be referred to as a slot-offset value or the like.

### <Alt. 2-2>

The terminal may drop PUCCH to be transmitted in a cell different from a PUCCH cell pattern, of PUCCH of the PUCCH repetition configured on a Pcell, a PScell, or a PUCCH-Scell.

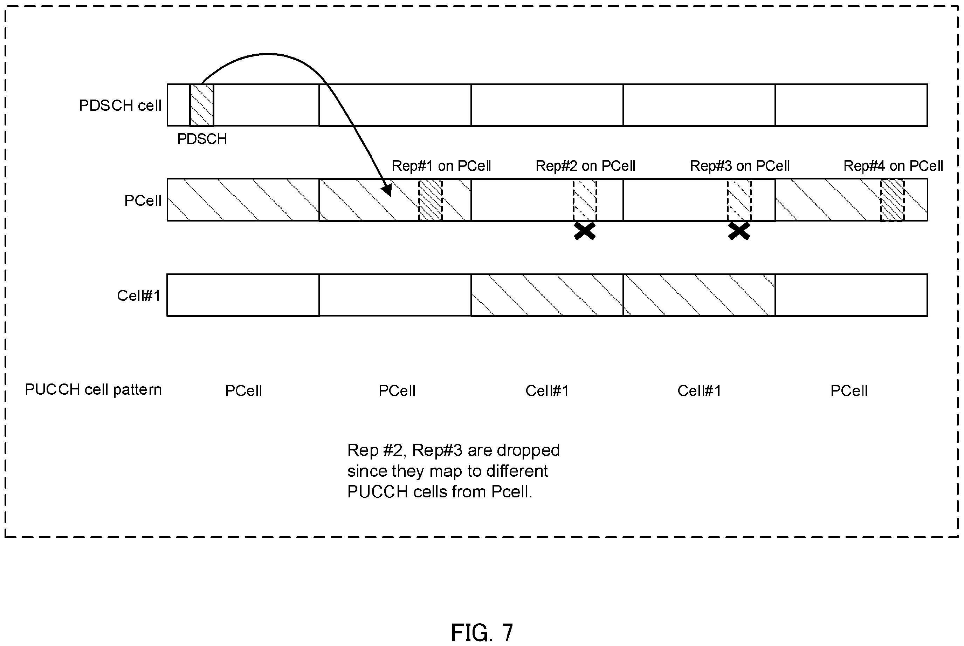

FIG. 7 is a diagram for describing an example of Alt. 2-2. In FIG. 7, the number of PUCCH repetitions and the PUCCH cell pattern are the same as in FIG. 6.

In Alt. 2-2, the terminal may drop PUCCH to be transmitted in a cell different from a PUCCH cell pattern, of PUCCH of the PUCCH repetitions configured on a Pcell, a PScell, or a PUCCH-Scell.

For example, in FIG. 7, the cells for PUCCH for the second and third times of the PUCCH repetitions are different from the PUCCH cell pattern "Cell #1". Accordingly, the terminal may drop the second and third PUCCH, of the four PUCCH of the PUCCH repetitions configured on the Pcell, as illustrated in FIG. 7.

### <Details of Proposal 2-2>

Proposal 2-2 will be described in detail. As mentioned above, in Proposal 2-2, the terminal may perform both the PUCCH repetition and the semi-static PUCCH carrier switching. In other words, for the terminal, the PUCCH repetition may be determined and the semi-static PUCCH carrier switching may be enabled. In Proposal 2-2, the terminal may operate based on the following Option 1 or Option 2.

### <Option 1>

The terminal may perform a PUCCH repetition procedure before determination of the semi-static PUCCH carrier switching. The terminal may perform the PUCCH repetition procedure and the PUCCH carrier switching based on the following steps.

### - Step 1

The terminal determines a Pcell, a PScell, or a PUCCH-Scell in which PUCCH of the PUCCH repetition will be transmitted. The terminal may determine the Pcell, the PScell, or the PUCCH-Scell in which PUCCH of the PUCCH repetition will be transmitted, based on the following Steps 1-1, 1-2, and 1-3.

### -- Step 1-1

The terminal determines a Pcell, a PScell, or a PUCCH-Scell in which a PUCCH resource for the PUCCH repetition will be transmitted.

### -- Step 1-2

The terminal determines (generates) a PUCCH repetition relating parameter. The PUCCH repetition relating parameter may be determined based on information transmitted from the base station, for example. The information may be transmitted by using RRC signalling, a MAC CE, and/or a DCI, for example.

The PUCCH repetition relating parameter may include a PUCCH repetition scheme and a PUCCH repetition factor. The PUCCH repetition scheme may indicate, for example, the slot based PUCCH repetition, the sub-slot based PUCCH repetition, or the dynamic PUCCH repetition. The PUCCH repetition factor may include, for example, PUCCH resource configuration information, PUCCH format information, and the number of PUCCH repetitions.

PUCCH of the PUCCH repetition may be transmitted in any cell of a Pcell, a PScell, and a PUCCH-Scell, for example. Thus, the PUCCH repetition relating parameter may be determined per Pcell, PScell, or PUCCH-Scell. For the PUCCH repetition, a PUCCH resource/format on the Pcell, the PScell, or the PUCCH-Scell may be determined based on the PUCCH repetition relating parameter.

### -- Step 1-3

The terminal determines, based on the PUCCH repetition relating parameter, whether the PUCCH repetition on the Pcell, the PScell, or the PUCCH-Scell is the slot based PUCCH repetition, the sub-slot based PUCCH repetition, or the dynamic PUCCH repetition.

### - Step 2

The terminal determines the semi-static PUCCH carrier switching in the PUCCH repetition. The terminal may determine the semi-static PUCCH carrier switching in the PUCCH repetition based on the following Options 1-1 and 1-2.

### <Option 1-1>

The terminal need not assume that PUCCH of the PUCCH repetition is mapped to different target PUCCH cells. In other words, the terminal may assume that all repetitions of the PUCCH repetition are mapped to the same target PUCCH cell.

The terminal may assume that a PUCCH cell pattern is configured such that all PUCCH of the PUCCH repetition is transmitted in the same cell as a cell in which the first PUCCH of the PUCCH repetition is transmitted. The base station may ensure this configuration of the PUCCH cell pattern.

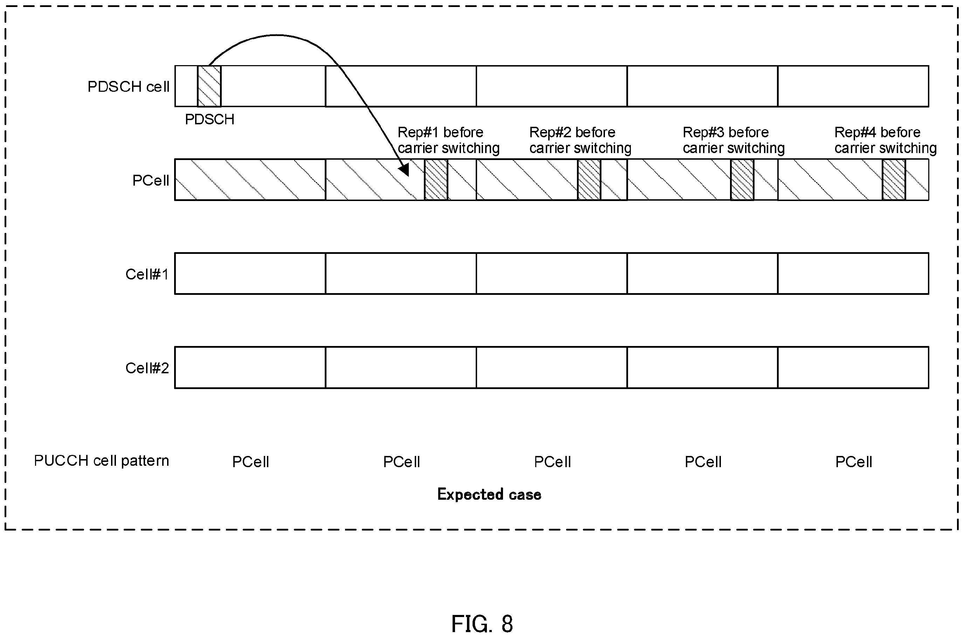

FIG. 8 is a diagram for describing an example of Option 1-1. In FIG. 8, the number of PUCCH repetitions is four. The PUCCH cell pattern is Cell #2.

In Option 1-1, the terminal need not assume that PUCCH of the PUCCH repetitions is mapped to different target PUCCH cells, respectively.

Incidentally, the base station may configure the same PUCCH cell pattern "Pcell," and the terminal may perform the PUCCH repetition in the same PUCCH cell pattern "Pcell," as illustrated in FIG. 8, for example.

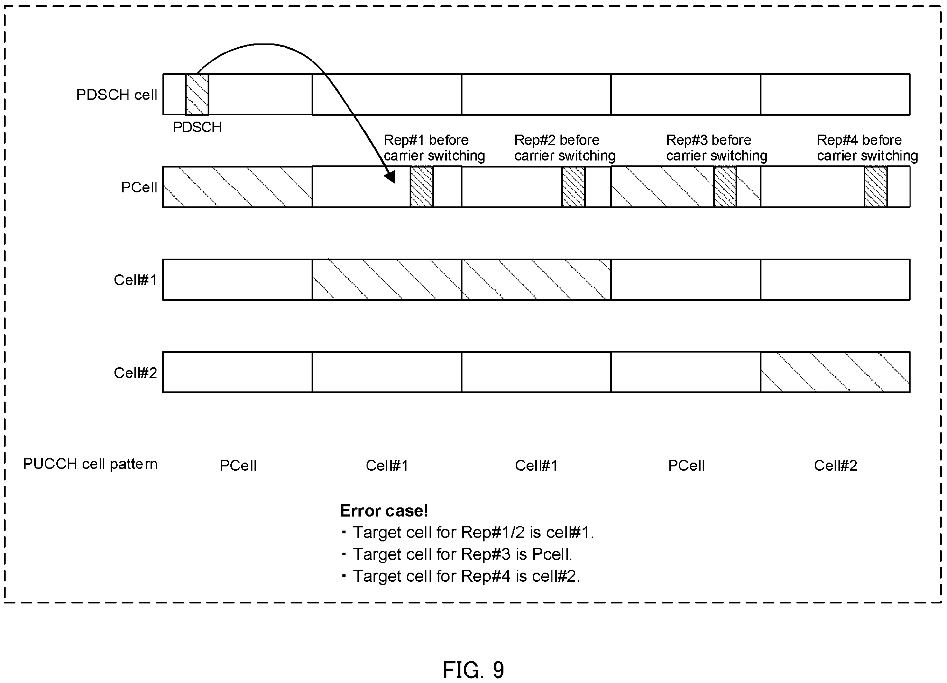

FIG. 9 is a diagram for describing an exemplay error case of Option 1-1. In FIG. 9, the number of PUCCH repetitions is four. The PUCCH cell pattern is Pcell, Cell #1, Cell #1, Pcell, and Cell #2.

As described in FIG. 8 either, in Option 1-1, the terminal need not assume that PUCCH of the PUCCH repetitions is mapped to different target PUCCH cells, respectively. Accordingly, the terminal need not assume that cells of the PUCCH cell pattern are not identical with each other as illustrated in FIG. 9.

### <Option 1-2>

The terminal may assume that PUCCH of the PUCCH repetition is mapped to different target PUCCH cells. The terminal may operate based on the following Option 1-2A and Option 1-2B.

### <Option 1-2A>

The terminal may determine the same (one) target PUCCH cell for all PUCCH of the PUCCH repetition.

For example, the terminal may determine a cell in which the remaining PUCCH is transmitted, based on a cell in which the first PUCCH of the PUCCH repetition is transmitted. That is, the terminal may determine the cell in which the first PUCCH is transmitted as the cell in which the remaining PUCCH is transmitted. In other words, the terminal may transmit all PUCCH of the PUCCH repetition, using the target PUCCH cell for PUCCH to be transmitted first.

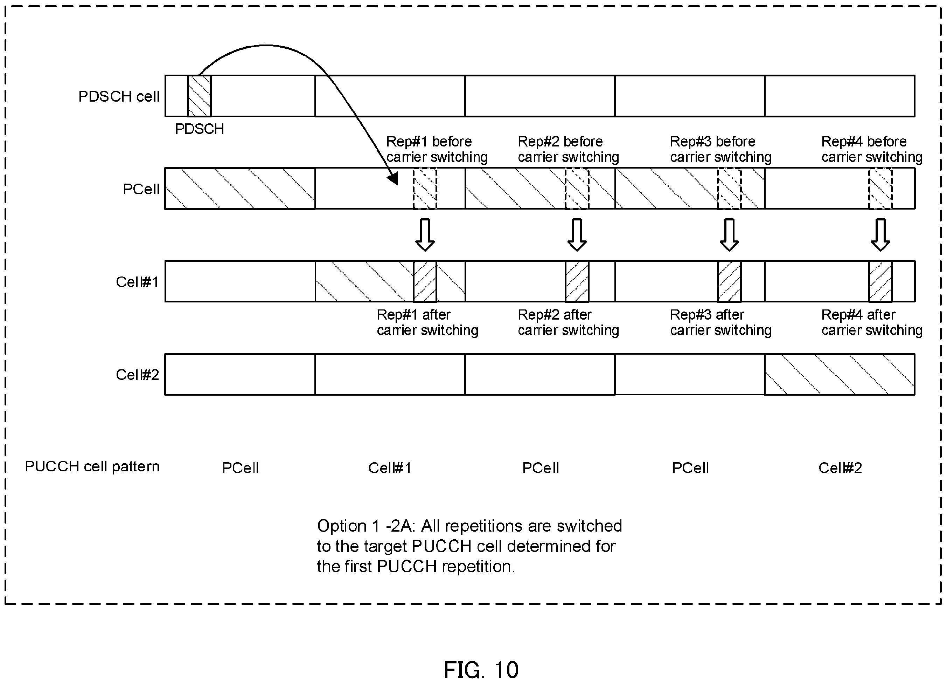

FIG. 10 is a diagram for describing an example of Option 1-2A. In FIG. 10, the number of PUCCH repetitions is four. The PUCCH cell pattern is Pcell, Cell #1, PCell, Pcell, and Cell #2.

The terminal determines, before performing the PUCCH carrier switching, a cell and a slot in which PUCCH of the PUCCH repetition is transmitted. In the example of FIG. 10, the terminal determines the Pcell.

In the PUCCH cell pattern, the target PUCCH cell in which the first PUCCH of the PUCCH repetitions is transmitted is Cell #1. Accordingly, the terminal determines Cell #1 as the cell in which the first PUCCH of the PUCCH repetition is transmitted. The terminal transmits, in the determined Cell1#, the first PUCCH of the PUCCH repetition and transmits, also in Cell #1, the remaining PUCCH of the PUCCH repetitions, as illustrated in FIG. 10.

### <Option 1-2B>

The terminal may determine the target PUCCH cell for each PUCCH of the PUCCH repetition, based on a PUCCH repetition timing position. That is, the terminal may map PUCCH of the PUCCH repetition to different target PUCCH cells. The terminal may determine a target PUCCH cell in which PUCCH of the PUCCH repetition is transmitted, based on the following Option 1-2B-1 and Option 1-2B-2.

### <Option 1-2B-1>

The terminal may transmit PUCCH of the PUCCH repetition in a target PUCCH cell (cell indicated by PUCCH cell pattern). In other words, the terminal may transmit PUCCH in the cell indicated by a PUCCH cell pattern at the timing of transmitting PUCCH of the PUCCH repetition.

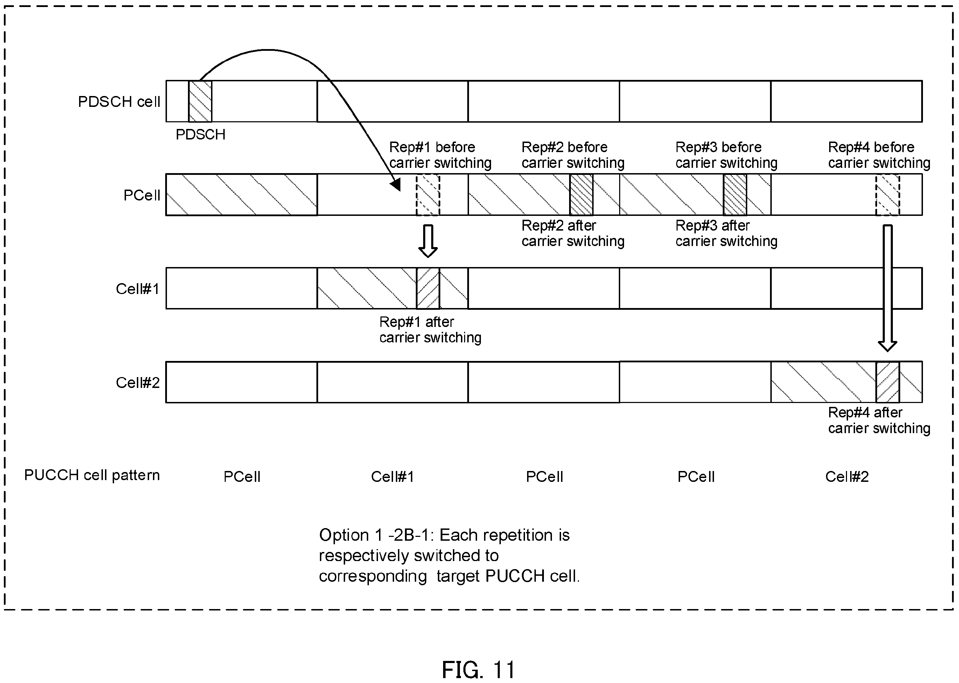

FIG. 11 is a diagram for describing an example of Option 1-2B-1. In FIG. 11, the number of PUCCH repetitions is four. The PUCCH cell pattern is Pcell, Cell #1, PCell, Pcell, and Cell #2.

The terminal determines, before performing the PUCCH carrier switching, a cell and a slot in which PUCCH of the PUCCH repetition is transmitted. In the example of FIG. 10, the terminal determines the Pcell.

In the PUCCH cell pattern, a target PUCCH cell in which the first PUCCH of the PUCCH repetitions is transmitted is Cell #1. Target PUCCH cells following Cell #1 are a Pcell, a Pcell, and Cell #2.

Therefore, the terminal transmits the first PUCCH of the PUCCH repetitions in Cell #1, as illustrated in FIG. 11. The terminal then sequentially transmits the remaining PUCCH of the PUCCH repetitions in the Pcell, the Pcell, and Cell #2 based on the PUCCH cell pattern, as illustrated in FIG. 11.

### <Option 1-2B-2>

The terminal may transmit PUCCH of the PUCCH repetition when a cell of the PUCCH cell pattern at the timing of transmitting this PUCCH of the PUCCH repetition matches with a cell in which the first PUCCH of the PUCCH repetition is transmitted.

That is, the terminal may transmit PUCCH in the target PUCCH cell when a target PUCCH cell corresponding to a slot for transmitting the remaining PUCCH is identical with the cell in which the first PUCCH has been transmitted. On the other hand, the terminal may drop (need not transmit) PUCCH in the target PUCCH cell when the target PUCCH cell corresponding to the slot for transmitting the remaining PUCCH is different from the cell in which the first PUCCH has been transmitted.

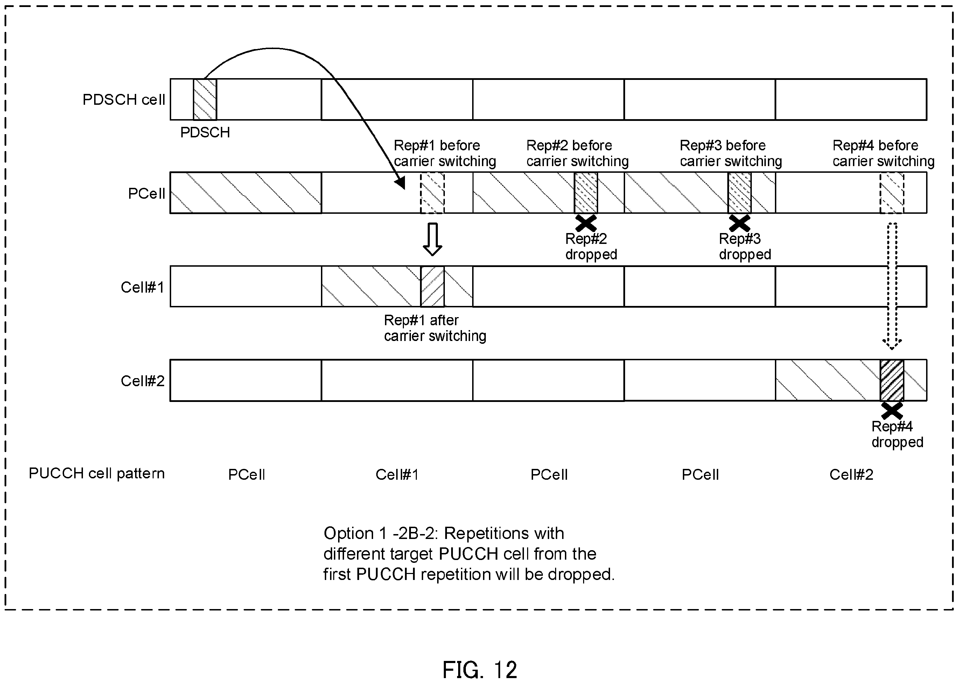

FIG. 12 is a diagram for describing an example of Option 1-2B-2. In FIG. 12, the number of PUCCH repetitions is four. The PUCCH cell pattern is Pcell, Cell #1, PCell, Pcell, and Cell #2.

The terminal determines, before performing the PUCCH carrier switching, a cell and a slot in which PUCCH of the PUCCH repetition is transmitted. In the example of FIG. 10, the terminal determines the Pcell.

In the PUCCH cell pattern, a target PUCCH cell in which the first PUCCH of the PUCCH repetitions is transmitted is Cell #1. Accordingly, the terminal determines Cell #1 as the cell in which the first PUCCH of the PUCCH repetitions is transmitted. The terminal then transmits PUCCH for the first time in the determined Cell #1.

In the example of FIG. 10, a target PUCCH cell corresponding to a slot for transmitting PUCCH for the second time of the PUCCH repetitions is a Pcell. The Pcell is different from the target PUCCH cell "Cell #1" in which the first PUCCH of the PUCCH repetition has been transmitted. Accordingly, the terminal drops transmission of PUCCH for the second time of the PUCCH repetitions.

In the example of FIG. 10, a target PUCCH cell corresponding to a slot for transmitting PUCCH for the third time of the PUCCH repetitions is a Pcell. The Pcell is different from the target PUCCH cell "Cell #1" in which the first PUCCH of the PUCCH repetition has been transmitted. Accordingly, the terminal drops transmission of PUCCH for the third time of the PUCCH repetitions.

In the example of FIG. 10, a target PUCCH cell corresponding to a slot for transmitting PUCCH for the fourth time of the PUCCH repetitions is Cell #2. Cell #2 is different from the target PUCCH cell "Cell #1" in which the first PUCCH of the PUCCH repetition has been transmitted. Accordingly, the terminal drops transmission of PUCCH for the fourth time of the PUCCH repetitions.

### <Option 2>

The terminal may perform a PUCCH repetition procedure after the determination of the semi-static PUCCH carrier switching. The terminal may perform the PUCCH carrier switching and the PUCCH repetition procedure based on the following steps.

### - Step 1

The terminal determines the semi-static PUCCH carrier switching of PUCCH. The terminal may determine the semi-static PUCCH carrier switching of PUCCH based on the following Steps 1-1, 1-2, and 1-3.

### -- Step 1-1

The terminal determines a target PUCCH cell with reference to a PUCCH cell pattern, based on a PUCCH report slot.

### -- Step 1-2

The terminal determines, in the target PUCCH cell, a PUCCH resource with which PUCCH is transmitted.

### - Step 2

The terminal determines the PUCCH repetition in the target PUCCH cell, based on the procedure of the slot based PUCCH repetition, the procedure of the sub-slot based PUCCH repetition, or the procedure of the dynamic PUCCH repetition. The terminal may determine the PUCCH repetition in the target PUCCH cell based on the following Steps 2-1 and 2-2.

### -- Step 2-1

The terminal determines (generates) a PUCCH repetition relating parameter. The PUCCH repetition relating parameter may be determined based on information transmitted from the base station, for example. The information may be transmitted by using RRC signalling, a MAC CE, and/or a DCI, for example.

The PUCCH repetition relating parameter may include a PUCCH repetition scheme and a PUCCH repetition factor. The PUCCH repetition scheme may indicate, for example, the slot based PUCCH repetition, the sub-slot based PUCCH repetition, or the dynamic PUCCH repetition. The PUCCH repetition factor may include, for example, PUCCH resource configuration information, PUCCH format information, and the number of PUCCH repetitions.

PUCCH of the PUCCH repetition can be transmitted in a target PUCCH cell. Therefore, a PUCCH repetition relating parameter may be determined per cell that may serve as the target PUCCH cell. For the PUCCH repetition, a PUCCH resource/format on the target PUCCH cell may be determined based on the PUCCH repetition relating parameter.

### -- Step 2-2

The terminal determines the PUCCH repetition in the target PUCCH cell based on the PUCCH repetition relating parameter. For example, the terminal may determine whether the PUCCH repetition in the target PUCCH cell is the slot based PUCCH repetition, the sub-slot based PUCCH repetition, or the dynamic PUCCH repetition.

Incidentally, the cell in which the first PUCCH of the PUCCH repetition is transmitted may be referred to as an initial target PUCCH cell. The target PUCCH cell in Step 2 may be regarded as the initial target PUCCH cell.

### <Option 2-1>

The terminal need not assume that PUCCH of the PUCCH repetition is mapped to a target PUCCH cell that is different from the initial target PUCCH cell.

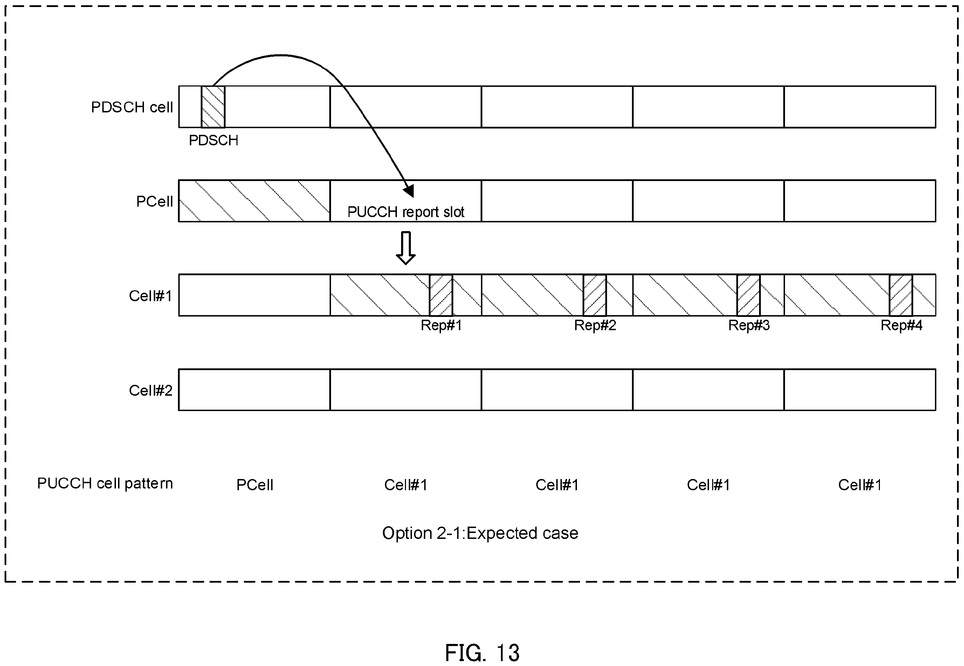

FIG. 13 is a diagram for describing an example of Option 2-1. In FIG. 13, the number of PUCCH repetitions is four. The PUCCH cell pattern is Pcell, Cell #1, Cell #1, Cell #1, and Cell #1.

In Option 2-1, the terminal need not assume that PUCCH of the PUCCH repetitions is mapped to a target PUCCH cell that is different from an initial target PUCCH cell. In the example of FIG. 13, the initial target PUCCH cell is Cell #1. Accordingly, the terminal need not assume that PUCCH of the PUCCH repetitions is mapped in a cell other than Cell #1.

Incidentally, the base station may configure the same PUCCH cell pattern "cell #1," and the terminal may perform the PUCCH repetition in the same PUCCH cell pattern "cell #1," as illustrated in FIG. 13, for example.

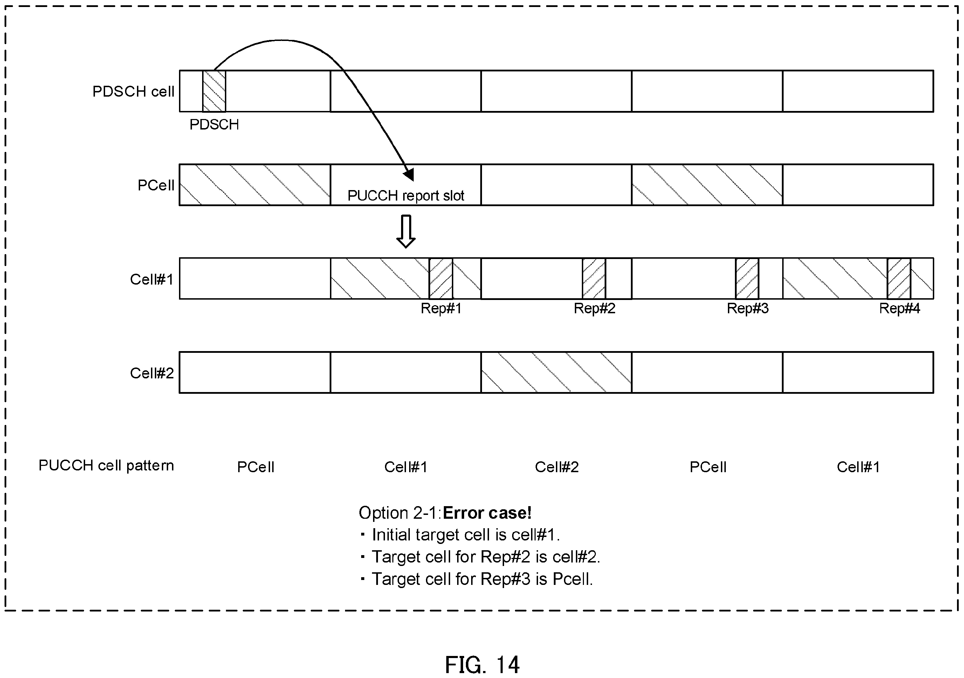

FIG. 14 is a diagram for describing an exemplay error case of Option 2-1. In FIG. 14, the number of PUCCH repetitions is four. The PUCCH cell pattern is Pcell, Cell #1, Cell #2, Pcell, and Cell #1.

As described in FIG. 13 either, in Option 2-1, the terminal need not assume that PUCCH of the PUCCH repetitions is mapped to a target PUCCH cell that is different from an initial target PUCCH cell. Accordingly, the terminal need not assume that the cells of the PUCCH cell pattern are not identical with the initial target PUCCH cell as illustrated in FIG. 14.

### <Option 2-2>

The terminal may assume that PUCCH of the PUCCH repetition is mapped to a target PUCCH cell that is different from an initial target PUCCH cell.

### <Option 2-2A>

The terminal may drop PUCCH of the PUCCH repetition in a target PUCCH cell that is different from an initial target PUCCH cell.

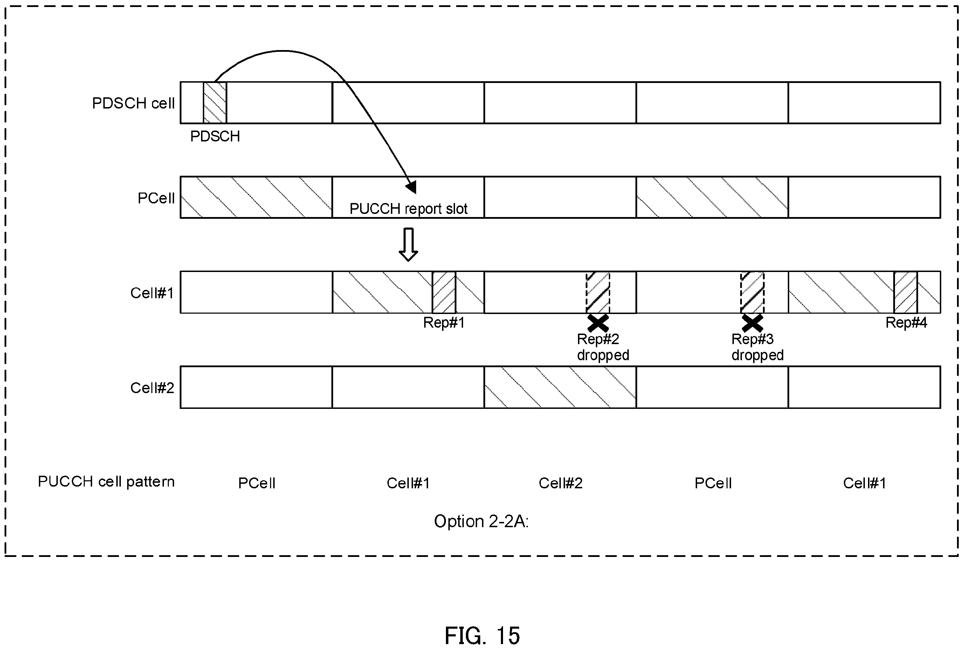

FIG. 15 is a diagram for describing an example of Option 2-2A. In FIG. 15, the number of PUCCH repetitions is four. The PUCCH cell pattern is Pcell, Cell #1, Cell #1, Pcell, and Cell #1.

The terminal determines the semi-static PUCCH carrier switching of PUCCH before performing the PUCCH repetition procedure.

For example, the terminal determines an initial target PUCCH cell, based on a PUCCH cell pattern corresponding to a PUCCH report slot. In the example of FIG. 15, the PUCCH cell pattern corresponding to the PUCCH report slot is Cell #1, and the initial target PUCCH cell is Cell #1. The terminal then determines target PUCCH cells "Cell #2," "PCell," and "Cell #1" for which the semi-static PUCCH carrier switching is performed.

In Option 2-2A, the terminal may drop PUCCH of the PUCCH repetition in a target PUCCH cell that is different from an initial target PUCCH cell. For example, in FIG. 15, the terminal may drop PUCCH of the PUCCH repetitions in the target PUCCH cells "Cell #2" and "PCell," which are different from the initial target PUCCH cell "Cell #1."

### <Option 2-2B>

The terminal may apply the semi-static PUCCH carrier switching per PUCCH repetition in an initial target PUCCH cell. That is, the terminal may map PUCCH of the PUCCH repetition to a target PUCCH cell that is different from the initial target PUCCH cell. In other words, the terminal may switch the target PUCCH cell in which PUCCH of the PUCCH repetition is transmitted, in accordanc with a PUCCH cell pattern.

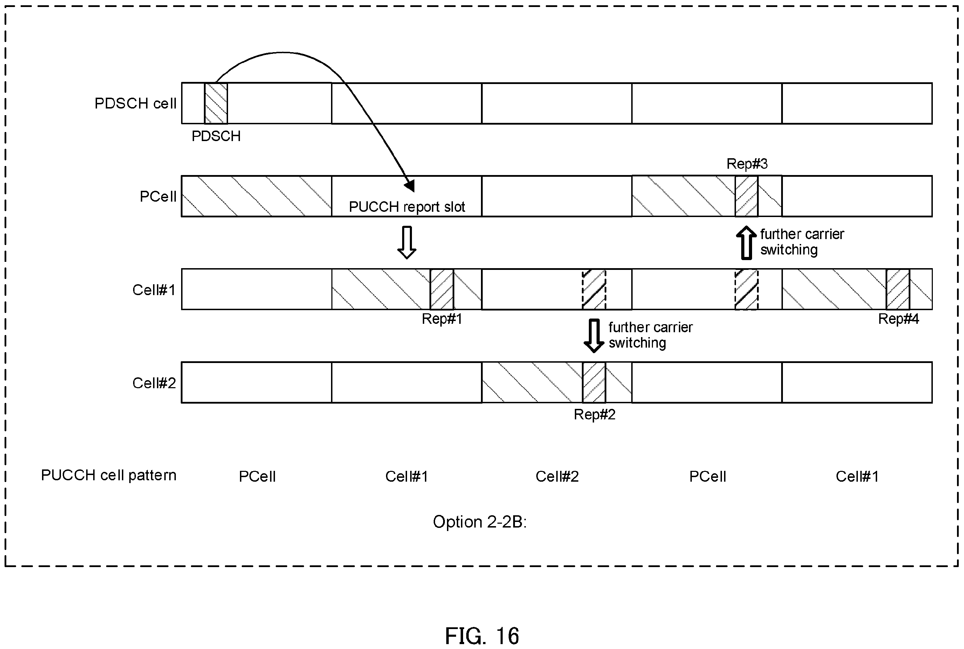

FIG. 16 is a diagram for describing an example of Option 2-2B. In FIG. 16, the number of PUCCH repetitions is four. The PUCCH cell pattern is Pcell, Cell #1, Cell #2, PCell, and Cell #1.

The terminal determines the semi-static PUCCH carrier switching of PUCCH before performing the PUCCH repetition procedure.

For example, the terminal determines an initial target PUCCH cell, based on a PUCCH cell pattern corresponding to a PUCCH report slot. In the example of FIG. 16, the PUCCH cell pattern corresponding to the PUCCH report slot is Cell #1, and the initial target PUCCH cell is Cell #1. The terminal then determines target PUCCH cells "Cell #2," "PCell," and "Cell #1" for which the semi-static PUCCH carrier switching is performed.

In Option 2-2B, the terminal may apply the semi-static PUCCH carrier switching per PUCCH repetition in an initial target PUCCH cell. For example, in FIG. 16, the terminal may switch the target PUCCH cell between "Cell #2," "PCell," and "Cell #1" for PUCCH repetitions "Rep#2," "Rep#3," and "Rep#4" in the initial target PUCCH cell "Cell #1."

### <Option 2-2C>

The terminal may transmit PUCCH of the PUCCH repetition in an initial target PUCCH cell, regardless of a target PUCCH cell corresponding to repetition in a PUCCH cell pattern. That is, the terminal may transmit PUCCH of the PUCCH repetition in the cell of the initial target PUCCH cell.

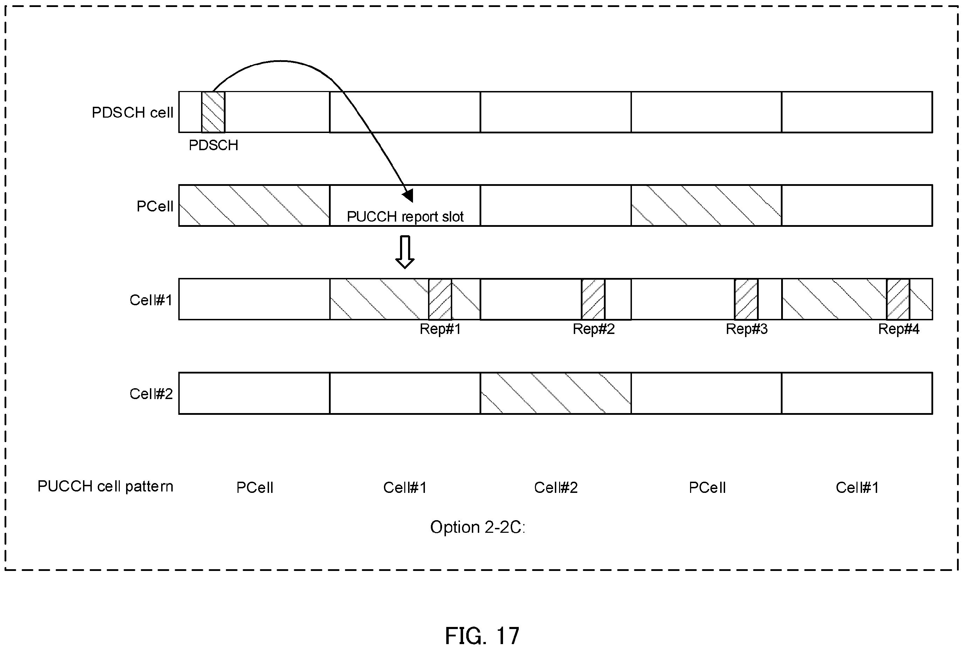

FIG. 17 is a diagram for describing an example of Option 2-2C. In FIG. 17, the number of PUCCH repetitions is four. The PUCCH cell pattern is Pcell, Cell #1, Cell #2, PCell, and Cell #1.

The terminal determines the semi-static PUCCH carrier switching of PUCCH before performing the PUCCH repetition procedure.

For example, the terminal determines an initial target PUCCH cell, based on a PUCCH cell pattern corresponding to a PUCCH report slot. In the example of FIG. 17, the PUCCH cell pattern corresponding to the PUCCH report slot is Cell #1, and the initial target PUCCH cell is Cell #1. The terminal then determines target PUCCH cells "Cell #2," "PCell," and "Cell #1" for which the semi-static PUCCH carrier switching is performed.

In Option 2-2B, the terminal may transmit all PUCCH of the PUCCH repetitions in a cell of an initial target PUCCH cell. For example, in FIG. 17, the initial target PUCCH cell is Cell #1. Accordingly, the terminal may transmit PUCCH of the PUCCH repetitions in Cell #1, regardless of the target PUCCH cell for the semi-static PUCCH carrier switching.

### <Proposal 3>

In Proposal 3, a case will be described where the dynamical PUCCU carrier switching is performed.

### <Option 1>

In a case where a DCI related with PUCCH includes a dynamic PUCCH carrier indication field, the terminal need not assume that a repetition factor greater than one is determined (configured and/or indicated) in a PUCCH resouce on the indicated PUCCH cell.

For example, when a target PUCCH cell is indicated by the DCI, the terminal need not assume a PUCCH repetition factor greater than one is determined for the selected PUCCH resource. That is, the terminal need not assume that the PUCCH repetition is determined when the dynamical PUCCU carrier switching is enabled.

### <Option 2>

The terminal may assume that a PUCCH repetition factor greater than one is determined for the PUCCH resource for the indicated PUCCH. That is, the terminal may assume that the determination of the PUCCH repetition and the enabling of the dynamic PUCCH carrier switching are simultaneously performed.

### <Option 2-1>

The terminal may ignore a PUCCH repetition factor when assuming that the determination of the PUCCH repetition and the enabling of the dynamic PUCCH carrier switching are simultaneously performed. For example, the terminal may assume a PUCCH repetition factor is always one.

### <Option 2-2>

The terminal may determine the PUCCH repetition in the PUCCH cell indicated in the DCI. The terminal may determine the PUCCH repetition based on the following steps.

### - Step 1

The terminal determines, based on the DCI, a PUCCH resource for the indicated cell and a PUCCH report slot.

### - Step 2

The terminal determines a PUCCH repetition parameter. The PUCCH repetition parameter may have information similar to that of the PUCCH repetition relating parameter mentioned above.

### - Step 3

The terminal determines the PUCCH repetition in the indicated PUCCH cell, based on the PUCCH repetition parameter. For example, the terminal may determine whether the PUCCH repetition in the indicated PUCCH cell is the slot based PUCCH repetition, the sub-slot based PUCCH repetition, or the dynamic PUCCH repetition.

In Option 2-2, when the semi-static PUCCH carrier switching is also enabled, the remaining PUCCH repetitions may be mapped to a target cell based on a PUCCH cell pattern.

### <Alt. 1>

The terminal need not assume that the remaining PUCCH excluding the first PUCCH of the PUCCH repetition is mapped to a PUCCH cell (cell based on PUCCH cell pattern) that is different from a PUCCH cell indicated by the DCI. The base station may ensure this configuration of the PUCCH cell pattern.

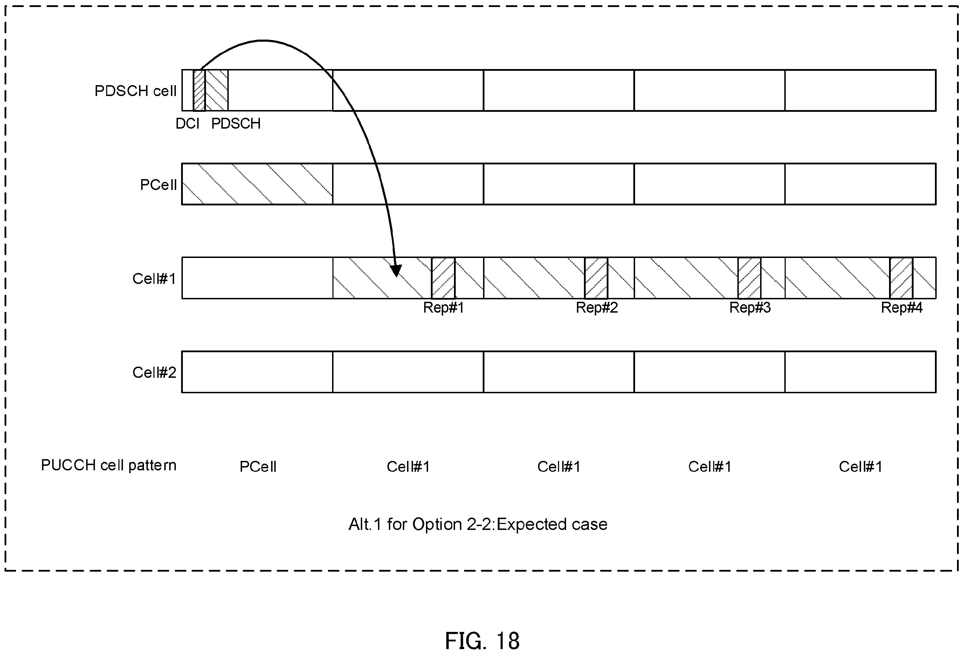

FIG. 18 is a diagram for describing an example of Alt. 1. In FIG. 18, the number of PUCCH repetitions is four. The PUCCH cell pattern is Cell #1.

In Alt. 1, the terminal need not assume that the remaining PUCCH excluding the first PUCCH of the PUCCH repetitions is mapped to a PUCCH cell that is different from a PUCCH cell indicated by the DCI.

Incidentally, for example, as illustrated in FIG. 18, the base station may configure a PUCCH cell pattern of the same cell "Cell #1" as the PUCCH cell indicated by the DCI, and the terminal may perform the PUCCH repetitions in the PUCCH cell pattern "Cell #1."

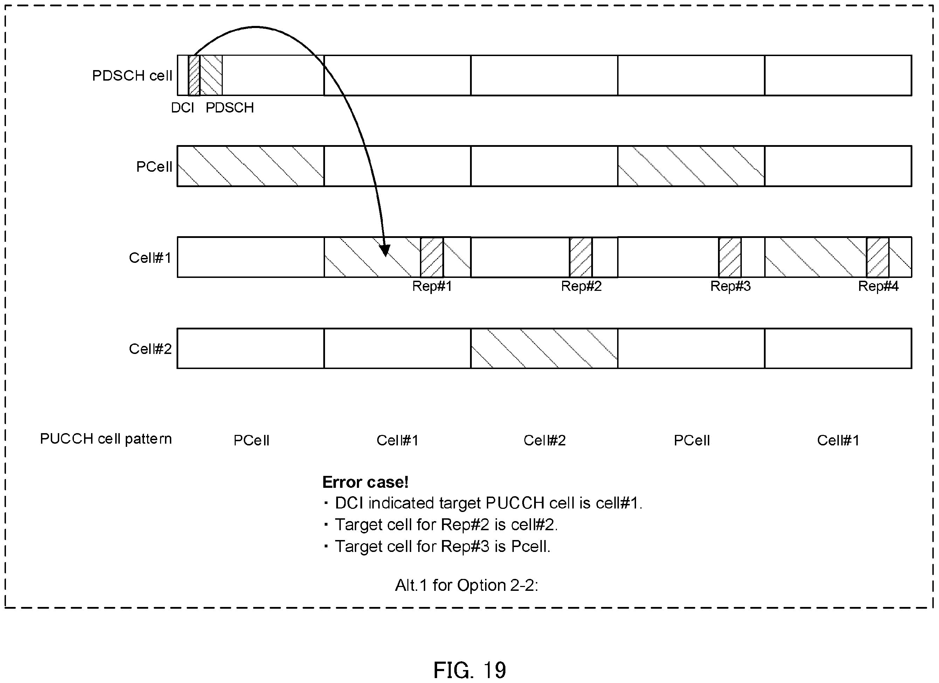

FIG. 19 is a diagram for describing an exemplay error case of Alt. 1. In FIG. 19, the number of PUCCH repetitions is four. The PUCCH cell pattern is Pcell, Cell #1, Cell #2, Pcell, and Cell #1.

As described in FIG. 18 either, in Alt. 1, the terminal need not assume that the target PUCCH cell indicated by the DCI is different from the subsequent PUCCH cell pattern. Accordingly, the terminal need not assume that the cells of the PUCCH cell pattern are not identical with the target PUCCH cell indicated by the DCI as illustrated in FIG. 19.

### <Alt. 2>

The terminal may assume that PUCCH of the PUCCH repetition is mapped to a PUCCH cell that is different from a target PUCCH cell indicated by the DCI.

### <Alt. 2-A>

The terminal may drop PUCCH of the PUCCH repetition in a target PUCCH cell that is different from a target PUCCH cell indicated by the DCI.

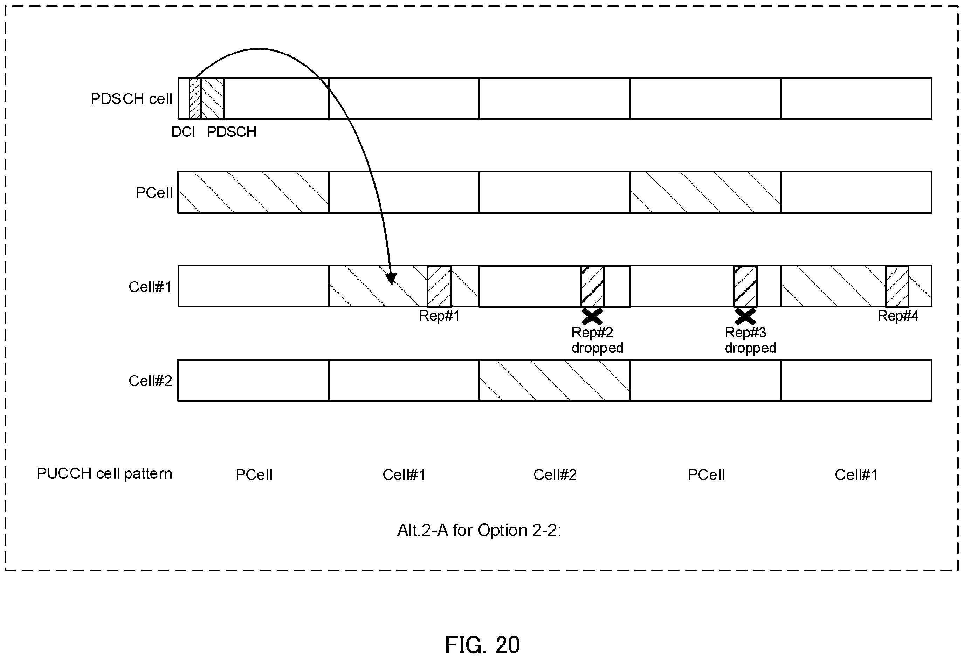

FIG. 20 is a diagram for describing an example of Alt. 2-A. In FIG. 20, the number of PUCCH repetitions is four. The PUCCH cell pattern is Pcell, Cell #1, Cell #2, Pcell, and Cell #1.

In Alt. 2-A, the terminal may drop PUCCH of the PUCCH repetition in a target PUCCH cell that is different from a target PUCCH cell indicated by the DCI.

For example, in FIG. 20, the target PUCCH cell for PUCCH in the second repetition is Cell #2, which is different from the target PUCCH cell "Cell #1" indicated by the DCI. Accordingly, the terminal drops PUCCH for the second repetition. In FIG. 20, the target PUCCH cell for PUCCH in the third repetition is a PCell, which is different from the target PUCCH cell "Cell #1" indicated by the DCI. Accordingly, the terminal drops PUCCH for the third repetition. In FIG. 20, the target PUCCH cell for PUCCH in the fourth repetition is Cell #1, which is identical with the target PUCCH cell "Cell #1" indicated by the DCI. Accordingly, the terminal does not drop PUCCH for the fourth repetition but transmits it in Cell # 1.

### <Alt. 2-B>

The terminal may apply the semi-static carrier switching in the remaining PUCCH except for the first PUCCH of the PUCCH repetition. That is, in the remaining PUCCH, the terminal may switch a target PUCCH cell, based on a PUCCH cell pattern.

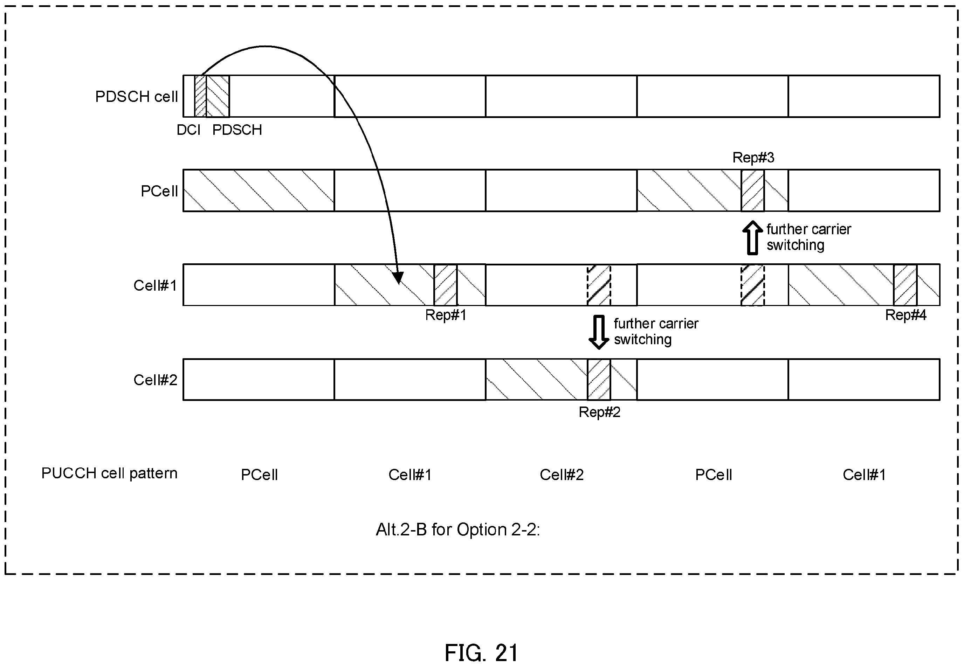

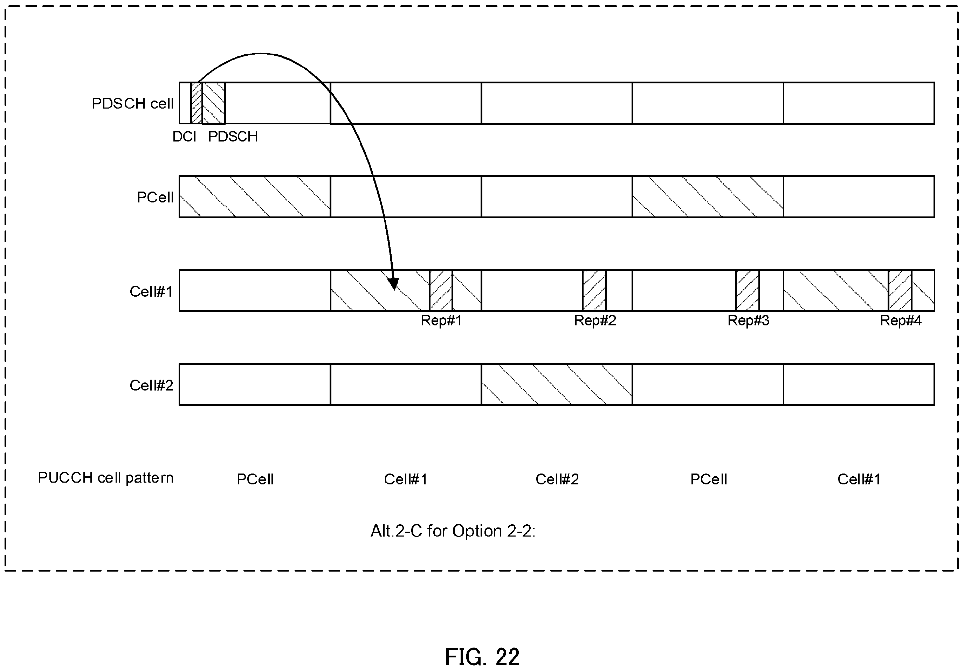

FIG. 21 is a diagram for describing an example of Alt. 2-B. In FIG. 22, the number of PUCCH repetitions is four. The PUCCH cell pattern is Pcell, Cell #1, Cell #2, Pcell, and Cell #1.

In Alt. 2-B, the terminal may apply the semi-static carrier switching in the remaining PUCCH except for the first PUCCH of the PUCCH repetition.

For example, as illustrated in FIG. 21, the terminal transmits PUCCH for the first repetition in Cell #1, based on the DCI. In PUCCH for the second and subsequent times, the terminal switches a target PUCCH cell and transmits PUCCH, based on a PUCCH cell pattern. For example, as illustrated in FIG. 21, the terminal switches the target PUCCH cell in the order of "Cell #2," "PCell," and "Cell #1" and transmits PUCCH for the second and subsequent times.

### <Alt. 2-C>

The terminal may transmit PUCCH of the PUCCH repetition in a target PUCCH cell indicated by the DCI, regardless of a target PUCCH cell corresponding to repetition in a PUCCH cell pattern. That is, the terminal may transmit all PUCCH of the PUCCH repetition in the cell of the target PUCCH cell indicated by the DCI.

FIG. 22 is a diagram for describing an example of Alt. 2-C. In FIG. 22, the number of PUCCH repetitions is four. The PUCCH cell pattern is Pcell, Cell #1, Cell #2, Pcell, and Cell #1.

In Alt. 2-C, the terminal may transmit PUCCH of the PUCCH repetition in a target PUCCH cell indicated by the DCI, regardless of a target PUCCH cell corresponding to repetition in a PUCCH cell pattern.

For example, in FIG. 22, a target PUCCH cell indicated by the DCI is Cell #1. The terminal transmits PUCCH for the first repetition in the target PUCCH cell, Cell #1, which is based on the DCI, and transmits PUCCH for the remaining PUCCH repetitions in Cell #1 indicated by the DCI, regardless of the PUCCH cell pattern.

### <Variations>

Which of the plurality of proposals is applied, the plurality of options is applied, and/or which of the plurality of alternatives (Alts) is applied may be determined by the following methods.
- It is/they are configured by higher-layer parameter;
   - The UE reports it/them as UE capability(ies);
   - It is/they are described in the specifications;
   - It is/they are determined based on configuration of higher-layer parameter and reported UE capability; and
   - It is/they are determined by a combination of two or more of the above determinations.

The terminal may determine which of the plurality of options to apply and/or which of the plurality of alternatives to apply, based on the PUCCH repetition scheme (slot based PUCCH repetition, sub-slot based PUCCH repetition, or dynamic PUCCH repetition) to be applied.

When determining to transmit PUCCH (repetition) in a certain PUCCH cell, the terminal may drop PUCCH (repetition) due to a collision with a DL symbol. The terminal may take cancellation due to the DL collision into account after the Proposal procedures.

In Proposal 1 and Proposal 2, a Pcell, a PScell, and a PUCCH-Scell may be replaced with any reference cell used in the interpretation of K1 in the semi-static PUCCH carrier switching.

In the semi-static PUCCH carrier switching, the following two alternatives (Alts) may be applied to resource determination method (based on PUCCH cell pattern) in a target PUCCH cell.

### <Alt. 1>

According to a PUCCH resource selection rule of Rel. 15 or Rel. 16, a PUCCH resource for the PUCCH repetition may be determined based on a UCI payload size and PRI (if present).

### <Alt. 2>

A PUCCH resource for the PUCCH repetition in a target PUCCH cell may be determined based on a PUCCH repetition parameters in a Pcell, a PScell, and a PUCCH-Scell.

For example, for the PUCCH repetition, the same starting symbol, PUCCH length, number of RBs, code rate, and the like may be reused in the Pcell, the PScell, and the PUCCH-Scell. A starting PRB may be determined based on a "carrier frequency offset between the target PUCCH cell and the Pcell/PScell/PUCCH-Scell" and a "starting PRB of an original PUCCH resource on the Pcell/PScell/PUCCH-Scell."

### <Variations>

The UE capability representing capability of the terminal may include the following information indicating the capability of the terminal. Note that the information indicating the capability of the terminal may correspond to information defining the capability of the terminal.
- Information that whether the terminal supports the PUCCH carrier switching;
- Information defining whether the terminal supports the semi-static PUCCH carrier switching based on a PUCCH cell pattern;
- Information defining whether the terminal supports the joint operation of the semi-static PUCCH carrier switching and the PUCCH repetition;
- Information defining whether the terminal supports the dynamic PUCCH carrier switching based on a DCI;
- Information defining whether the terminal supports the joint operation of the dynamic PUCCH carrier switching and the PUCCH repetition; and
- Information defining whether the terminal supports the sub-slot based PUCCH repetition.

### <Example of Radio Communication System>

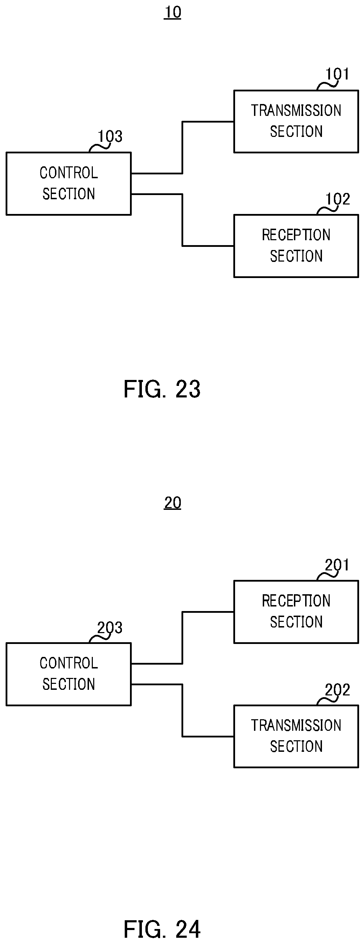

A radio communication system according to the present embodiment includes base station 10 illustrated in FIG. 23 and terminal 20 illustrated in FIG. 24. The number of base stations 10 and the number of terminals 20 are not particularly limited. For example, the system may be as illustrated in FIG. 1 in which two base stations 10 (base stations 10-1 and 10-2) communicate with one terminal 20. The radio communication system may be a radio communication system conforming to New Radio (NR). Illustratively, the radio communication system may be a radio communication system conforming to a scheme called URLLC and/or IIoT.

Note that, the radio communication system may be a radio communication system conforming to a scheme called 5G, Beyond 5G, 5G Evolution or 6G.

Base station 10 may be referred to as an NG-RAN Node, an ng-eNB, an eNodeB (eNB), or a gNodeB (gNB). Terminal 20 may be referred to as User Equipment (UE). Further, base station 10 may be regarded as an apparatus included in a network to which terminal 20 is connected.

The radio communication system may include a Next Generation-Radio Access Network (hereinafter referred to as NG-RAN). The NG-RAN includes a plurality of NG-RAN Nodes, specifically a plurality of gNBs (or ng-eNBs), and is connected to a core network (5GC, not illustrated) conforming to 5G. Note that, the NG-RAN and the 5GC may be simply represented as "network."

Base station 10 performs radio communication with terminal 20. For example, the radio communication to be performed conforms to the NR. By controlling radio signals transmitted from a plurality of antenna elements, at least one of base station 10 and terminal 20 may support Massive Multiple-Input Multiple-Output (MIMO) that generates a beam (BM) having higher directivity. Further, at least one of base station 10 and terminal 20 may support carrier aggregation (CA) that aggregates and uses a plurality of component carriers (CC). Further, at least one of base station 10 and terminal 20 may support, e.g., dual connectivity (DC) in which communication is performed between terminal 20 and each of a plurality of base stations 10.

The radio communication system may support a plurality of frequency bands. For example, the radio communication system supports Frequency Range (FR) 1 and FR 2. , For example, the frequency bands of the respective FRs are as follows:
- FR 1: 410 MHz to 7.125 GHz; and
- FR 2: 24.25 GHz to 52.6 GHz.

In FR 1, a Sub-Carrier Spacing (SCS) of 15 kHz, 30 kHz or 60kHz may be used, and a bandwidth (BW) of 5 MHz to 100 MHz may be used. FR 2 is, for example, a higher frequency than FR 1. In FR 2, an SCS of 60 kHz or 120 kHz may be used and a bandwidth (BW) of 50 MHz to 400 MHz may be used. FR 2 may also include an SCS of 240 kHz.

The radio communication system in the present embodiment may support a higher frequency band than the frequency band of FR 2. For example, the radio communication system in the present embodiment may support a frequency band exceeding 52.6 GHz and up to 114.25 GHz. Such a high frequency band may be referred to as "FR 2x."

Further, Cyclic Prefix-Orthogonal Frequency Division Multiplexing (CP-OFDM) / Discrete Fourier Transform-Spread-Orthogonal Frequency Division Multiplexing (DFT-S-OFDM) having a sub-carrier spacing (SCS) larger than that in the examples described above may be applied. Further, the DFT-S-OFDM may be applied to either one or both of uplink and downlink.

In the radio communication system, a slot configuration pattern of Time Division Duplex (TDD) may be configured. For example, a pattern representing the order of two or more slots among a slot for transmitting a downlink (DL) signal, a slot for transmitting an uplink (UL) signal, a slot in which a DL signal(s), a UL signal(s), and a guard symbol(s) are mixed, and a slot in which a signal to be transmitted is flexibly changed may be specified in the slot configuration pattern.

Further, in the radio communication system, it is possible to perform PUSCH (or Physical Uplink Control Channel (PUCCH)) channel estimation by using a demodulation reference signal (DMRS) per slot, but it is further allowed to perform PUSCH (or PUCCH) channel estimation by using DMRSs assigned to a plurality of slots, respectively. Such channel estimation may be referred to as joint channel estimation or may be referred to as another name, such as cross-slot channel estimation.

In a plurality of slots, terminal 20 may transmit DMRSs assigned to the plurality of slots, respectively, such that base station 10 can perform the joint channel estimation using DMRSs.

Further, in the radio communication system, an enhanced function may be added to the function of feedback from terminal 20 to base station 10. For example, an enhanced feedback function of the terminal for HARQ-ACK may be added.

Next, configurations of base station 10 and terminal 20 will be described. Note that the configurations of base station 10 and terminal 20 described below illustrate an example of functions related to the present embodiment. Base station 10 and terminal 20 may have functions that are not illustrated. Further, functional classification and/or names of functional sections are/is not limited as long as the functions serve for executing operations according to the present embodiment.

### <Configuration of Base Station>

FIG. 23 is a block diagram illustrating an exemplary configuration of base station 10 according to the present embodiment. Base station 10 includes, for example, transmission section 101, reception section 102, and control section 103. Base station 10 communicates wirelessly with terminal 20 (see FIG. 24).

Transmission section 101 transmits a downlink (DL) signal to terminal 20. For example, transmission section 101 transmits the DL signal under the control of control section 103.

The DL signal may include, for example, a downlink data signal and control information (e.g., Downlink Control Information (DCI)). The DL signal may also include information (e.g., UL grant) indicating scheduling related to signal transmission of terminal 20. Moreover, the DL signal may include higher layer control information (e.g., Radio Resource Control (RRC) control information). Furthermore, the DL signal may include a reference signal.

Channels used for DL signal transmission include, for example, a data channel and a control channel For example, the data channel may include a Physical Downlink Shared Channel (PDSCH), and the control channel may include a Physical Downlink Control Channel (PDCCH). For example, base station 10 transmits control information to terminal 20 by using PDCCH and transmits a downlink data signal by using PDSCH.

The reference signal included in the DL signal may include, for example, at least one of a Demodulation Reference Signal (DMRS), a Phase Tracking Reference Signal (PTRS), a Channel State Information-Reference Signal (CSI-RS), a Sounding Reference Signal (SRS), and a Positioning Reference Signal (PRS) for position information. For example, the reference signal such as the DMRS and the PTRS is used for demodulation of a downlink data signal and is transmitted by using PDSCH.

Reception section 102 receives an uplink (UL) signal transmitted from terminal 20. For example, reception section 102 receives the UL signal under the control of control section 103.

Control section 103 controls communication operations of base station 10 including transmission processing in transmission section 101 and reception processing in reception section 102.

By way of example, control section 103 acquires information such as data and control information from a higher layer and outputs the data and control information to transmission section 101. Further, control section 103 outputs the data, the control information, and/or the like received from reception section 102 to the higher layer.

For example, control section 103 allocates a resource (or channel) used for DL signal transmission and reception and/or a resource used for UL signal transmission and reception, based on the signal (e.g., data, control information and/or the like) received from terminal 20 and/or the data, the control information, and/or the like acquired from the higher layer. Information on the allocated resource(s) may be included in control information to be transmitted to terminal 20.

Control section 103 configures a PUCCH resource as an example of the allocation of the resource used for UL transmission and reception. Information on the PUCCH configuration such as a PUCCH cell timing pattern (PUCCH configuration information) may be indicated to terminal 20 by RRC.

### <Configuration of Terminal>

FIG. 24 is a block diagram illustrating an exemplary configuration of terminal 20 according to the present embodiment. Terminal 20 includes, for example, reception section 201, transmission section 202, and control section 203. Terminal 20 communicates wirelessly with, for example, base station 10.

Reception section 201 receives a DL signal transmitted from base station 10. For example, reception section 201 receives the DL signal under the control of control section 203.

Transmission section 202 transmits an UL signal to base station 10. For example, transmission section 202 transmits the UL signal under the control of control section 203.

The UL signal may include, for example, an uplink data signal and control information (e.g., UCI). For example, information on processing capability of terminal 20 (e.g., UE capability) may also be included. Further, the UL signal may include a reference signal.

Channels used for UL signal transmission include, for example, a data channel and a control channel. For example, the data channel includes a Physical Uplink Shared Channel (PUSCH) and the control channel includes a Physical Uplink Control Channel (PUCCH). For example, terminal 20 receives control information from base station 10 by using PUCCH and transmits an uplink data signal by using PUSCH.

The reference signal included in the UL signal may include, for example, at least one of a DMRS, a PTRS, a CSI-RS, an SRS, and a PRS. For example, the reference signal such as the DMRS and the PTRS is used for demodulation of an uplink data signal and is transmitted by using an uplink channel (e.g., PUSCH).

Control section 203 controls communication operations of terminal 20 including reception processing in reception section 201 and transmission processing in transmission section 202.

By way of example, control section 203 acquires information such as data and control information from a higher layer and outputs the data and control information to transmission section 202. Further, control section 203 outputs, for example, the data, the control information, and/or the like received from reception section 201 to the higher layer.

For example, control section 203 controls transmission of information to be fed back to base station 10. The information to be fed back to base station 10 may include, for example, HARQ-ACK, Channel State Information (CSI), and a Scheduling Request (SR). The information to be fed back to base station 10 may be included in the UCI. The UCI is transmitted in a PUCCH resource.

Control section 203 configures a PUCCH resource based on the configuration information (e.g., configuration information such as PUCCH cell timing pattern and/or DCI, which are/is indicated by RRC) received from base station 10. Control section 203 determines the PUCCH resource to be used for transmitting the information to be fed back to base station 10. Under the control of control section 203, transmission section 202 transmits the information to be fed back to base station 10 in the PUCCH resource determined by control section 203.

Note that, the channels used for DL signal transmission and the channels used for UL signal transmission are not limited to the examples mentioned above. For example, the channels used for the DL signal transmission and the channels used for the UL signal transmission may include a Random Access Channel (RACH) and a Physical Broadcast Channel (PBCH). The RACH may be used for, for example, transmission of Downlink Control Information (DCI) including a Random Access Radio Network Temporary Identifier (RA-RNTI).

Reception section 203 may receive a control signal. The control signal is a signal that controls the PUCCH carrier switching and may be a signal such as a DCI, a MAC CE, and/or RRC. Further, the control signal is a signal that controls the PUCCH repetition and may be a signal such as the DCI, the MAC CE, and/or the RRC.

Control section 203 may control (determine), based on the control signal received by reception section 203, switching of a carrier on which an uplink control signal is transmitted and repetition transmission of the uplink control signal. The uplink control signal may be PUCCH, for example. The switching of the carrier may be a semi-static carrier switching or a dynamic carrier switching. The repetition transmission may be transmission of a slot based repetition, a sub-slot based repetition, or a dynamic repetition. More specifically, the repetition transmission may be a slot based PUCCH repetition transmission, a sub-slot based PUCCH repetition transmission, or a dynamic PUCCH repetition transmission.

Control section 203 need not assume that both the switching of the carrier for the uplink control signal and the repetition transmission of the uplink control signal are simultaneously performed. Control section 203 may assume that both the switching of the carrier for the uplink control signal and the repetition transmission of the uplink control signal are simultaneously performed.

The configuration described above enables terminal 20 to appropriately operate in a radio system in which the repetition and the carrier switching for PUCCH can be performed.

The present disclosure has been described, thus far.

### <Hardware Configuration and/or the like>

Note that, the block diagrams used to describe the embodiment illustrate blocks on the basis of functions. These functional blocks (component sections) are implemented by any combination of at least hardware or software. A method for implementing the functional blocks is not particularly limited. That is, the functional blocks may be implemented using one physically or logically coupled apparatus. Two or more physically or logically separate apparatuses may be directly or indirectly connected (for example, via wires or by radio), and the plurality of apparatuses may be used to implement the functional blocks. The functional blocks may be implemented by combining software with the one apparatus or the plurality of apparatuses described above.

The functions include, but not limited to, judging, deciding, determining, computing, calculating, processing, deriving, investigating, searching, confirming, receiving, transmitting, outputting, accessing, solving, selecting, choosing, establishing, comparing, supposing, expecting, regarding, broadcasting, notifying, communicating, forwarding, configuring, reconfiguring, allocating, mapping, assigning, and the like. For example, a functional block (component section) that functions to achieve transmission is referred to as "transmitting unit," "transmission section," or "transmitter." The methods for implementing the functions are not limited specifically as described above.

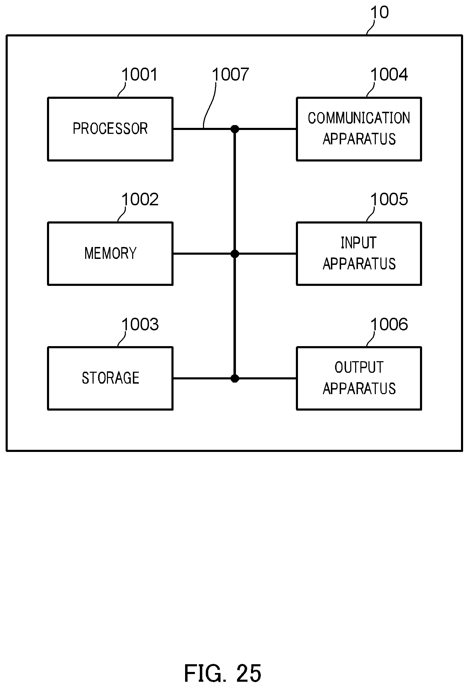

For example, the base station, the terminal, and the like according to an embodiment of the present disclosure may function as a computer that executes processing of a radio communication method of the present disclosure. FIG. 25 illustrates an exemplary hardware configuration of the base station or the terminal according to the present embodiment. Base station 10 and terminal 20 mentioned above may be each physically constituted as a computer apparatus including processor 1001, memory 1002, storage 1003, communication apparatus 1004, input apparatus 1005, output apparatus 1006, bus 1007, and the like.

Note that, the term "apparatus" in the following description can be replaced with a circuit, a device, a unit, or the like. The hardware configuration of base station 10 or terminal 20 may include one apparatus or a plurality of apparatuses illustrated in the drawings, or may not include part of the apparatuses.

The functions of base station 10 and terminal 20 are implemented by predetermined software (program) loaded into hardware such as processor 1001, memory 1002, and the like, according to which processor 1001 performs the arithmetic and controls communication performed by communication apparatus 1004 or at least one of reading and writing of data in memory 1002 and storage 1003.

Processor 1001 operates an operating system to entirely control the computer, for example. Processor 1001 may be composed of a central processing unit (CPU) including an interface with peripheral apparatuses, control apparatus, arithmetic apparatus, register, and the like. For example, control section 103, control section 203, and the like described above may be implemented by processor 1001.

Processor 1001 reads a program (program code), a software module, data, and the like from at least one of storage 1003 and communication apparatus 1004 to memory 1002 and performs various types of processing according to the program (program code), the software module, the data, and the like. As the program, a program for causing the computer to perform at least a part of the operation described in the above embodiments is used. For example, control section 203 of terminal 20 may be implemented by a control program stored in memory 1002 and operated by a control program operating in processor 1001, and the other functional blocks may also be implemented in the same way. While it has been described that the various types of processing as described above are performed by one processor 1001, the various types of processing may be performed by two or more processors 1001 at the same time or in succession. Processor 1001 may be implemented using one or more chips. Note that the program may be transmitted from a network through a telecommunication line.

Memory 1002 is a computer-readable recording medium and may be composed of, for example, at least one of a Read Only Memory (ROM), an Erasable Programmable ROM (EPROM), an Electrically Erasable Programmable ROM (EEPROM), and a Random Access Memory (RAM). Memory 1002 may be called as a register, a cache, a main memory (main storage apparatus), or the like. Memory 1002 can save a program (program code), a software module, and the like that can be executed to carry out the radio communication method according to one embodiment of the present disclosure.

Storage 1003 is a computer-readable recording medium and may be composed of, for example, at least one of an optical disk such as a Compact Disc ROM (CD-ROM), a hard disk drive, a flexible disk, a magneto-optical disk (for example, a compact disc, a digital versatile disc, or a Bluray (registered trademark) disc), a smart card, a flash memory (for example, a card, a stick, or a key drive), a floppy (registered trademark) disk, and a magnetic strip. Storage 1003 may also be called as an auxiliary storage apparatus. The storage medium as described above may be, for example, a database, a server, or other appropriate media including at least one of memory 1002 and storage 1003.

Communication apparatus 1004 is hardware (transmission and reception device) for communication between computers through at least one of wired and radio networks and is also called as, for example, a network device, a network controller, a network card, or a communication module. Communication apparatus 1004 may be configured to include a high frequency switch, a duplexer, a filter, a frequency synthesizer, and the like in order to achieve at least one of Frequency Division Duplex (FDD) and Time Division Duplex (TDD), for example. For example, transmission section 101, reception section 102, reception section 201, transmission section 202, and the like described above may be realized by communication apparatus 1004.

Input apparatus 1005 is an input device (e.g., a keyboard, a mouse, a microphone, a switch, a button, or a sensor) that receives input from the outside. Output apparatus 1006 is an output device (e.g., a display, a speaker, or an LED lamp) which makes outputs to the outside. Note that input apparatus 1005 and output apparatus 1006 may be integrated (e.g., a touch panel).

The apparatuses, such as processor 1001, memory 1002, and the like are connected by bus 1007 for communication of information. Bus 1007 may be configured using a single bus or using buses different between each pair of the apparatuses.

Furthermore, base station 10 and terminal 20 may include hardware, such as a microprocessor, a digital signal processor (DSP), an ASIC (Application Specific Integrated Circuit), a PLD (Programmable Logic Device), and an FPGA (Field Programmable Gate Array), and the hardware may implement part or all of the functional blocks. For example, processor 1001 may be implemented using at least one of these pieces of hardware.

### <Notification and Signaling of Information>

The notification of information is not limited to the embodiment described in the present disclosure, and the information may be notified by another method. For example, the notification of information may be carried out by one or a combination of physical layer signaling (e.g., Downlink Control Information (DCI) and Uplink Control Information (UCI)), higher layer signaling (e.g., Radio Resource Control (RRC) signaling, Medium Access Control (MAC) signaling, broadcast information (Master Information Block (MIB), and System Information Block (SIB))), and other signals. The RRC signaling may be called an RRC message and may be, for example, an RRC connection setup message, an RRC connection reconfiguration message, or the like.

### <Applied System>

The embodiments described in the present disclosure may be applied to at least one of a system using Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (registered trademark), GSM (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or other appropriate systems and a next-generation system extended based on the above systems. Additionally or alternatively, a combination of two or more of the systems (e.g., a combination of at least LTE or LTE-A and 5G) may be applied.

### <Processing Procedure and/or the like>

The orders of the processing procedures, the sequences, the flow charts, and the like of the aspects and embodiments described in the present disclosure may be changed as long as there is no contradiction. For example, elements of various steps are presented in exemplary orders in the methods described in the present disclosure, and the methods are not limited to the presented specific orders.

### <Operation of Base Station>

Specific operations which are described in the present disclosure as being performed by the base station may sometimes be performed by a higher node (upper node) depending on the situation. Various operations performed for communication with a terminal in a network constituted by one network node or a plurality of network nodes including a base station can be obviously performed by at least one of the base station and a network node other than the base station (examples include, but not limited to, Mobility Management Entity (MME) or Serving Gateway (S-GW)). Although there is one network node in addition to the base station in the case illustrated above, a plurality of other network nodes may be combined (e.g., MME and S-GW).

### <Direction of Input and Output>

The information or the like (see the item of "Information and Signals") can be output from a higher layer (or a lower layer) to a lower layer (or a higher layer). The information, the signals, and the like may be input and output through a plurality of network nodes.

### <Handling of Input and Output Information and the like>

The input and output information and the like may be saved in a specific place (e.g., memory) or may be managed using a management table. The input and output information and the like can be overwritten, updated, or additionally written. The output information and the like may be deleted. The input information and the like may be transmitted to another apparatus.

### <Determination Method>

The determination may be made based on a value expressed by one bit (0 or 1), based on a Boolean value (true or false), or based on comparison with a numerical value (e.g., comparison with a predetermined value).

### <Variations and the like ofAspects>

The aspects and embodiments described in the present disclosure may be independently used, may be used in combination, or may be switched and used along the execution. Furthermore, notification of predetermined information (for example, notification indicating "it is X") is not limited to explicit notification, and may be performed implicitly (for example, by not notifying the predetermined information).

While the present disclosure has been described in detail, it is obvious to those skilled in the art that the present disclosure is not limited to the embodiments described in the present disclosure. Modifications and variations of the aspects of the present disclosure can be made without departing from the spirit and the scope of the present disclosure defined by the description of the appended claims. Therefore, the description of the present disclosure is intended for exemplary description and does not limit the present disclosure in any sense.

### <Software>

Regardless of whether the software is called as software, firmware, middleware, a microcode, or a hardware description language or by another name, the software should be broadly interpreted to mean an instruction, an instruction set, a code, a code segment, a program code, a program, a subprogram, a software module, an application, a software application, a software package, a routine, a subroutine, an object, an executable file, an execution thread, a procedure, a function, and the like.

The software, the instruction, the information, and the like may be transmitted and received through a transmission medium. For example, when the software is transmitted from a website, a server, or another remote source by using at least one of a wired technique (e.g., a coaxial cable, an optical fiber cable, a twisted pair, and a digital subscriber line (DSL)) and a radio technique (e.g., an infrared ray and a microwave), the at least one of the wired technique and the radio technique is included in the definition of the transmission medium.

### information and Signals>

The information, the signals, and the like described in the present disclosure may be expressed by using any of various different techniques. For example, data, instructions, commands, information, signals, bits, symbols, chips, and the like that may be mentioned throughout the entire description may be expressed by one or an arbitrary combination of voltage, current, electromagnetic waves, magnetic fields, magnetic particles, optical fields, and photons.

Note that the terms described in the present disclosure and the terms necessary to understand the present disclosure may be replaced with terms with the same or similar meaning. For example, at least one of the channel and the symbol may be a signal (signaling). The signal may be a message. The component carrier (CC) may be called a carrier frequency, a cell, a frequency carrier, or the like.

### <System and Network>

The terms "system" and "network" used in the present disclosure can be interchangeably used.

### <Names of Parameters and Channels>

The information, the parameters, and the like described in the present disclosure may be expressed using absolute values, using values relative to predetermined values, or using other corresponding information. For example, radio resources may be indicated by indices.

The names used for the parameters are not limitative in any respect. Furthermore, the numerical formulas and the like using the parameters may be different from the ones explicitly disclosed in the present disclosure. Various channels (e.g., PUCCH and PDCCH) and information elements, can be identified by any suitable names, and various names assigned to these various channels and information elements are not limitative in any respect.

### <Base Station>

The terms "Base Station (BS)," "radio base station," "fixed station," "NodeB," "eNodeB (eNB)," "gNodeB (gNB)," "access point," "transmission point," "reception point, "transmission/reception point," "cell," "sector," "cell group," "carrier," "component carrier," and the like may be used interchangeably in the present disclosure. The base station may be called a macro cell, a small cell, a femtocell, or a pico cell.

The base station can accommodate one cell or a plurality of (e.g., three) cells. When the base station accommodates a plurality of cells, the entire coverage area of the base station can be divided into a plurality of smaller areas, and each of the smaller areas can provide a communication service based on a base station subsystem (e.g., small base station for indoor remote radio head (RRH)). The term "cell" or "sector" denotes part or all of the coverage area of at least one of the base station and the base station subsystem that perform the communication service in the coverage.

### <Mobile Sation>

The terms "Mobile Station (MS)," "user terminal," "User Equipment (UE)," and "terminal" may be used interchangeably in the present disclosure.

The mobile station may be called, by those skilled in the art, a subscriber station, a mobile unit, a subscriber unit, a radio unit, a remote unit, a mobile device, a radio device, a radio communication device, a remote device, a mobile subscriber station, an access terminal, a mobile terminal, a radio terminal, a remote terminal, a handset, a user agent, a mobile client, a client, or by some other appropriate terms.

### <Base Station/Mobile Station>

At least one of the base station and the mobile station may be called a transmission apparatus, a reception apparatus, a communication apparatus, or the like. Note that, at least one of the base station and the mobile station may be a device mounted in a mobile entity, the mobile entity itself, or the like. The mobile entity may be a vehicle (e.g., an automobile or an airplane), an unmanned mobile entity (e.g., a drone or an autonomous vehicle), or a robot (a manned-type or unmanned-type robot). Note that, at least one of the base station and the mobile station also includes an apparatus that does not necessarily move during communication operation. For example, at least one of the base station and the mobile station may be Internet-of Things (IoT) equipment such as a sensor.

The base station in the present disclosure may also be replaced with the terminal. For example, the embodiment of the present disclosure may find application in a configuration that results from replacing communication between the base station and the terminal with communication between multiple terminals (such communication may, e.g., be referred to as device-to-device (D2D), vehicle-to-everything (V2X), or the like). In this case, terminal 20 may be configured to have the functions that base station 10 described above has. The wordings "uplink" and "downlink" may be replaced with a corresponding wording for inter-equipment communication (e.g., "side"). For example, an uplink channel, a downlink channel, and the like may be replaced with a side channel.

Similarly, the terminal in the present disclosure may be replaced with the base station. In this case, base station 10 is configured to have the functions that terminal 20 described above has.

### <Meaning and Interpretation of Terms>

As used herein, the term "determining" may encompass a wide variety of actions. For example, "determining" may be regarded as judging, calculating, computing, processing, deriving, investigating, looking up, searching (or, search or inquiry)(e.g., looking up in a table, a database or another data structure), ascertaining and the like. Furthermore, "determining" may be regarded as receiving (for example, receiving information), transmitting (for example, transmitting information), inputting, outputting, accessing (for example, accessing data in a memory) and the like. Also, "determining" may be regarded as resolving, selecting, choosing, establishing, comparing and the like. That is, "determining" may be regarded as a certain type of action related to determining. Also, "determining" may be replaced with "assuming," "expecting," "considering," and the like.

The terms "connected" and "coupled" as well as any modifications of the terms mean any direct or indirect connection and coupling between two or more elements, and the terms can include cases in which one or more intermediate elements exist between two "connected" or "coupled" elements. The coupling or the connection between elements may be physical or logical coupling or connection or may be a combination of physical and logical coupling or connection. For example, "connected" may be replaced with "accessed." When the terms are used in the present disclosure, two elements can be considered to be "connected" or "coupled" to each other using at least one of one or more electrical wires, cables, and printed electrical connections or using electromagnetic energy with a wavelength of a radio frequency domain, a microwave domain, an optical (both visible and invisible) domain, or the like hat are non-limiting and non-inclusive examples.

### <Reference Signal>

The reference signal can also be abbreviated as an RS and may also be called as a pilot depending on the applied standard.

### <Meaning of "based on">

The description "based on" used in the present disclosure does not mean "based only on," unless otherwise specified. In other words, the description "based on" means both of "based only on" and "based at least on."

### <"First" and "Second">

Any reference to elements by using the terms "first," "second," and the like does not generally limit the quantities of or the order of these elements. The terms can be used as a convenient method of distinguishing between two or more elements in the present disclosure. Therefore, reference to first and second elements does not mean that only two elements can be employed, or that the first element has to precede the second element somehow.

### <"Means">

The "means" in the configuration of each apparatus may be replaced with "section," "circuit," "device," or the like.

### <Open-ended Format>

In a case where terms "include," "including," and their modifications are used in the present disclosure, these terms are intended to be inclusive like the term "comprising." Further, the term "or" used in the present disclosure is not intended to be an exclusive or.

### <Time Units such as a TTI, Frequency Units such as an RB, and a Radio Frame Configuration>

The radio frame may be constituted by one frame or a plurality of frames in the time domain. The one frame or each of the plurality of frames may be called a subframe in the time domain. The subframe may be further constituted by one slot or a plurality of slots in the time domain. The subframe may have a fixed time length (e.g., 1 ms) independent of numerology.

The numerology may be a communication parameter that is applied to at least one of transmission and reception of a certain signal or channel. The numerology, for example, indicates at least one of SubCarrier Spacing (SCS), a bandwidth, a symbol length, a cyclic prefix length, Transmission Time Interval (TTI), the number of symbols per TTI, a radio frame configuration, specific filtering processing that is performed by a transmission and reception apparatus in the frequency domain, specific windowing processing that is performed by the transmission and reception apparatus in the time domain, and the like.

The slot may be constituted by one symbol or a plurality of symbols (e.g., Orthogonal Frequency Division Multiplexing (OFDM)) symbol, Single Carrier-Frequency Division Multiple Access (SC-FDMA) symbol, or the like) in the time domain. The slot may also be a time unit based on the numerology.

The slot may include a plurality of mini-slots. Each of the mini-slots may be constituted by one or more symbols in the time domain. Furthermore, the mini-slot may be referred to as a subslot. The mini-slot may be constituted by a smaller number of symbols than the slot. A PDSCH (or a PUSCH) that is transmitted in the time unit that is greater than the mini-slot may be referred to as a PDSCH (or a PUSCH) mapping type A. The PDSCH (or the PUSCH) that is transmitted using the mini-slot may be referred to as a PDSCH (or PUSCH) mapping type B.

The radio frame, the subframe, the slot, the mini slot, and the symbol indicate time units in transmitting signals. The radio frame, the subframe, the slot, the mini slot, and the symbol may be called by other corresponding names.

For example, one subframe, a plurality of continuous subframes, one slot, or one mini-slot may be called a Transmission Time Interval (TTI). That is, at least one of the subframe and the TTI may be a subframe (1 ms) in the existing LTE, a duration (e.g., 1 to 13 symbols) that is shorter than 1 ms, or a duration that is longer than 1 ms. Note that, a unit that represents the TTI may be referred to as a slot, a mini-slot, or the like instead of a subframe.

Here, the TTI, for example, refers to a minimum time unit for scheduling in radio communication. For example, in an LTE system, the base station performs scheduling for allocating a radio resource (a frequency bandwidth, a transmit power, and the like that are used in each user terminal) on a TTI-by-TTI basis to each user terminal. Note that, the definition of TTI is not limited to this.

The TTI may be a time unit for transmitting a channel-coded data packet (a transport block), a code block, or a codeword, or may be a unit for processing such as scheduling and link adaptation. Note that, when the TTI is assigned, a time section (for example, the number of symbols) to which the transport block, the code block, the codeword, or the like is actually mapped may be shorter than the TTI.

Note that, in a case where one slot or one mini-slot is referred to as the TTI, one or more TTIs (that is, one or more slots, or one or more mini-slots) may be a minimum time unit for the scheduling. Furthermore, the number of slots (the number of mini-slots) that make up the minimum time unit for the scheduling may be controlled.

A TTI that has a time length of 1 ms may be referred to as a usual TTI (a TTI in LTE Rel. 8 to LTE Rel. 12), a normal TTI, a long TTI, a usual subframe, a normal subframe, a long subframe, a slot, or the like. A TTI that is shorter than the usual TTI may be referred to as a shortened TTI, a short TTI, a partial TTI (or a fractional TTI), a shortened subframe, a short subframe, a mini-slot, a subslot, a slot, or the like.

Note that the long TTI (for example, the usual TTI, the subframe, or the like) may be replaced with the TTI that has a time length which exceeds 1 ms, and the short TTI (for example, the shortened TTI or the like) may be replaced with a TTI that has a TTI length which is less than a TTI length of the long TTI and is equal to or longer than 1 ms.

A resource block (RB) is a resource allocation unit in the time domain and the frequency domain, and may include one or more contiguous subcarriers in the frequency domain. The number of subcarriers that are included in the RB may be identical regardless of the numerology, and may be 12, for example. The number of subcarriers that are included in the RB may be determined based on the numerology.

In addition, the RB may include one symbol or a plurality of symbols in the time domain, and may have a length of one slot, one mini slot, one subframe, or one TTI. One TTI and one subframe may be constituted by one resource block or a plurality of resource blocks.

Note that one or more RBs may be referred to as a Physical Resource Block (PRB), a Sub-Carrier Group (SCG), a Resource Element Group (REG), a PRB pair, an RB pair, or the like.

In addition, the resource block may be constituted by one or more Resource Elements (REs). For example, one RE may be a radio resource region that is one subcarrier and one symbol.

A bandwidth part (BWP) (which may be referred to as a partial bandwidth or the like) may represent a subset of contiguous common resource blocks (RB) for certain numerology in a certain carrier. Here, the common RBs may be identified by RB indices that use a common reference point of the carrier as a reference. The PRB may be defined by a certain BWP and may be numbered within the BWP.

The BWP may include a UL BWP and a DL BWP. An UE may be configured with one or more BWPs within one carrier.

At least one of the configured BWPs may be active, and the UE does not have to assume transmission/reception of a predetermined signal or channel outside the active BWP. Note that, "cell," "carrier," and the like in the present disclosure may be replaced with "BWP."

Structures of the radio frame, the subframe, the slot, the mini-slot, the symbol, and the like are described merely as examples. For example, the configuration such as the number of subframes that are included in the radio frame, the number of slots per subframe or radio frame, the number of mini-slots that are included within the slot, the numbers of symbols and RBs that are included in the slot or the mini-slot, the number of subcarriers that are included in the RB, the number of symbols within the TTI, the symbol length, the Cyclic Prefix (CP) length, and the like can be changed in various ways.

### <Maximum Transmit Power>

The "maximum transmit power" described in the present disclosure may mean a maximum value of the transmit power, the nominal UE maximum transmit power, or the rated UE maximum transmit power.

### <Articles>

In a case where articles, such as "a," "an," and "the" in English, for example, are added in the present disclosure by translation, nouns following these articles may have the same meaning as used in the plural.

### <"Diferrent">

In the present disclosure, the expression "A and B are different" may mean that "A and B are different from each other." Note that, the expression may also mean that "A and B are different from C." The expressions "separated" and "coupled" may also be interpreted in the same manner as the expression "A and B are different."

### Industrial Applicability

An aspect of the present disclosure is useful for radio communication systems.

### Reference Signs List

10 Base station
20 Terminal
101, 202 Transmission section
102, 201 Reception section
103, 203 Control section

## Claims

1. A terminal, comprising:
a reception section that receives a control signal; and
a control section that controls, based on the control signal, switching of a carrier on which an uplink control signal is transmitted, and repetition transmission of the uplink control signal.

2. The terminal according to claim 1, wherein the control section does not assume that both the switching of the carrier and the repetition transmission of the uplink control signal are simultaneously performed.

3. The terminal according to claim 1, wherein the control section assumes that both the switching of the carrier and the repetition transmission of the uplink control signal are simultaneously performed.

4. The terminal according to any one of claims 1 to 3, wherein the repetition transmission is a slot based repetition transmission, a sub-slot based repetition transmission, or a dynamic repetition transmission.

5. The terminal according to any one of claims 1 to 4, wherein the switching of the carrier is a semi-static carrier switching or a dynamic carrier switching.

6. A radio communication method, comprising:
receiving a control signal by a terminal; and
controlling, by the terminal, based on the control signal, switching of a carrier on which an uplink control signal is transmitted, and repetition transmission of the uplink control signal.
